# EUROPEAN PATENT SPECIFICATION

(11) **EP 4 596 384 B1**
(45) Date of publication and mention of the grant of the patent: **05.08.2026**
(21) Application number: 24211125.0
(22) Date of filing: 06.11.2024
(51) Int. Cl.: B62K 11/04, B62K 25/28, B62M 7/02

(54) **STRADDLED VEHICLE**
GRÄTSCHSITZFAHRZEUG
VÉHICULE À SELLE

(30) Priority: 02.02.2024 JP 2024014860
(43) Date of publication of application: 06.08.2025
(73) Proprietor: Yamaha Hatsudoki Kabushiki Kaisha, Iwata-shi, Shizuoka 438-8501 (JP)
(72) Inventor: Date, Takashi, Iwata-shi, Shizuoka, 4388501 (JP); Tajima, Mitsuru, Iwata-shi, Shizuoka, 4388501 (JP); Fukuda, Yosuke, Iwata-shi, Shizuoka, 4388501 (JP)
(74) Representative: Grünecker Patent- und Rechtsanwälte PartG mbB

(56) References cited:
- EP-A1- 1 767 759
- EP-A2- 1 741 964
- JP-B2- 4 959 480
- US-A1- 2005 082 100

## Description

The present invention relates to a straddled vehicle.

WO 2006/006435 A discloses a straddled vehicle. A straddled vehicle includes a vehicle body frame, a seat, a power unit, and a rear wheel. The power unit is disposed below the seat. The power unit swings with respect to the vehicle body frame. The power unit includes an engine, a continuously variable transmission (CVT), and an electric motor. The engine generates power. The continuously variable transmission transmits power of the engine to the rear wheel. The electric motor changes a gear ratio of the continuously variable transmission. The electric motor is also referred to as an ECVT motor, for example.

The rear wheel is cantilevered by the power unit. The straddled vehicle does not include a rear arm.

Specifically, the straddled vehicle includes a rear axle. The rear axle supports the rear wheel. The rear axle is cantilevered by the power unit. The rear axle is not supported at both ends of the rear axle. The rear axle is supported only at one end of the rear axle.

In WO 2006/006435 A, the rear wheel is not supported at both ends.

The document US 2005/082100 A1 discloses a straddled vehicle according to the preamble of claim 1.

It is the object of the present invention to provide a straddled vehicle including a power unit including a continuously variable transmission and an electric motor, and a rear wheel supported at both ends having a compact structure and is easy to maintain. According to the present invention said object is solved by a straddled vehicle having the features of independent claim 1. Preferred embodiments are laid down in the dependent claims.

Accordingly, a configuration in which a rear wheel is supported by a power unit and a rear arm has been studied first. Specifically, the straddled vehicle includes a vehicle body frame, a power unit, a rear arm, and a rear wheel. The power unit swings with respect to the vehicle body frame. The rear arm swings with respect to the vehicle body frame. The rear wheel is supported by the power unit and the rear arm. The power unit includes a first support in addition to the continuously variable transmission and the electric motor. The first support supports the rear arm.

In a case where the power unit includes the electric motor and the first support, the electric motor is disposed at a position not interfering with the first support.

For example, the electric motor is disposed higher than the first support. In this case, the electric motor is disposed at a relatively high position. Therefore, the length of the power unit in the up-down direction of the straddled vehicle is relatively long.

Alternatively, the first support is disposed higher than the electric motor. In this case, the first support is disposed at a relatively high position. Therefore, the length of the power unit in the up-down direction of the straddled vehicle is relatively long.

Therefore, a first problem occurs when the straddled vehicle includes the power unit and the rear arm, and the power unit includes the first support in addition to the continuously variable transmission and the electric motor. The first problem is that the length of the power unit in the up-down direction of the straddled vehicle is long.

When the length of the power unit in the up-down direction of the straddled vehicle is long, the power unit is disposed at a relatively high position. When the length of the power unit in the up-down direction of the straddled vehicle is long, the upper end of the power unit is disposed at a relatively high position. As a result, the seat is disposed at a relatively high position. When the seat is disposed at a relatively high position, it is difficult for the driver of the straddled vehicle to reach the ground with the foot of the driver. That is, the first problem lowers the foot grounding property of the straddled vehicle, for example.

Therefore, a configuration for shortening the length of the power unit in the up-down direction of the straddled vehicle although the power unit includes the first support in addition to the continuously variable transmission and the electric motor has been studied.

Hence, the straddled vehicle according to the preferred embodiment includes:
a vehicle body frame;
a power unit configured to swing with respect to the vehicle body frame;
a rear arm configured to swing with respect to the vehicle body frame; and
a rear wheel supported by the power unit and the rear arm, wherein
the power unit includes:
   an engine that generates power;
   a continuously variable transmission that transmits power of the engine to the rear wheels;
   an electric motor that changes a gear ratio of the continuously variable transmission; and a first support that supports the rear arm, and
   at least a part of the electric motor overlaps the first support in a side view of the straddled vehicle.

A straddled vehicle includes a vehicle body frame, a power unit, a rear arm, and a rear wheel. The power unit swings with respect to the vehicle body frame. The rear arm swings with respect to the vehicle body frame. The rear wheel is supported by the power unit and the rear arm. Therefore, the rear wheel is supported at both ends.

The power unit includes an engine, a continuously variable transmission, an electric motor, and a first support. The engine generates power. The continuously variable transmission transmits power of the engine to the rear wheel. The electric motor changes the gear ratio of the continuously variable transmission. The first support supports the rear arm. At least a part of the electric motor overlaps the first support in a side view of the straddled vehicle. Therefore, it is easy to shorten the length of the power unit in the up-down direction of the straddled vehicle.

In summary, the straddled vehicle includes a power unit and a rear wheel. The power unit includes a continuously variable transmission and an electric motor for the continuously variable transmission. The rear wheel is supported at both ends. In order to support the rear wheel at both ends, the power unit further includes a first support. Here, at least a part of the electric motor overlaps the first support in a side view of the straddled vehicle. Therefore, although the power unit includes the continuously variable transmission, the electric motor, and the first support, it is easy to shorten the length of the power unit in the up-down direction of the straddled vehicle.

In the straddled vehicle, the engine preferably includes
a crankcase that is preferably disposed in front of the rear wheel,
the electric motor is preferably disposed outside the crankcase, and
the first support is disposed outside the crankcase.

The electric motor is disposed outside the crankcase. Therefore, it is easy to install the electric motor. The first support is disposed outside the crankcase. Therefore, it is easy for the first support to support the rear arm.

In the straddled vehicle, the electric motor is preferably disposed above the crankcase.

Therefore, it is easier to install the electric motor.

In the straddled vehicle, the first support preferably includes:
a cylindrical portion that has a cylindrical shape, the cylindrical portion being connected to the rear arm; and
a plate portion that extends from the crankcase to the cylindrical portion, and
at least a part of the electric motor preferably overlaps the plate portion in a side view of the straddled vehicle.

The first support includes a cylindrical portion and a plate portion. Therefore, it is easy for the first support to support the rear arm. Furthermore, it is easy for at least a part of the electric motor to overlap the first support in a side view of the straddled vehicle.

In the straddled vehicle, the electric motor is preferably attached to the crankcase.

Therefore, it is easy to install the electric motor.

In the straddled vehicle, the crankcase preferably includes:
a first case; and
a second case that is coupled to the first case,
the electric motor is preferably fixed to the first case, and
the first support is fixed preferably to the second case.

Therefore, it is easy to prevent interference between the electric motor and the first support.

In the straddled vehicle, the electric motor is preferably configured to be detachable from the first case in a state where the second case is coupled to the first case.

Therefore, when removing the electric motor from the first case, it is not necessary to separate the second case from the first case. Therefore, it is easy to remove the electric motor from the first case.

In the straddled vehicle, the straddled vehicle preferably includes
a first bolt,
when the first bolt is at a first fastening position, the first bolt preferably fastens the electric motor to the crankcase, and
the first support preferably has a through hole for inserting a tool for fastening the first bolt and loosening the first bolt.

The straddled vehicle includes the first bolt. When the first bolt is at the first fastening position, the first bolt fastens the electric motor to the crankcase. Therefore, when the first bolt is at the first fastening position, the electric motor is attached to the crankcase. The electric motor is removable from the crankcase.

The first support has the through hole. The through hole is for inserting a tool. The tool fastens the first bolt and loosens the first bolt. Therefore, it is easy to fasten the first bolt. It is easy to loosen the first bolt. Therefore, it is easy to attach the electric motor to the crankcase. It is easy to remove the electric motor from the crankcase.

In the straddled vehicle, when the first bolt is at the first fastening position, the first bolt is preferably visually recognizable through the through hole in a side view of the straddled vehicle.

Therefore, it is easy for the tool to come into contact with the first bolt through the through hole.

In the straddled vehicle, the through hole preferably extends in a transverse direction of the straddled vehicle.

Therefore, the first bolt can be easily visually recognizable through the through hole in the side view of the straddled vehicle.

In the straddled vehicle, when the first bolt is at the first fastening position, the first bolt preferably extends in a transverse direction of the straddled vehicle.

Therefore, it is easy for the tool to fasten the first bolt and loosen the first bolt through the through hole.

In the straddled vehicle, a separation distance between the electric motor and the first support in a transverse direction of the straddled vehicle is preferably smaller than a length of the electric motor in the transverse direction of the straddled vehicle.

Therefore, the separation distance is relatively small. Therefore, it is easy to reduce the size of the power unit.

In the straddled vehicle, the power unit includes
a transmission case that houses the continuously variable transmission, and
the electric motor is disposed between the transmission case and the first support in a transverse direction of the straddled vehicle.

Therefore, it is easy to dispose the electric motor at a low position. Therefore, it is easy to arrange the power unit at a low position.

In the straddled vehicle, at least a part of the electric motor preferably overlaps the transmission case in a side view of the straddled vehicle.

Therefore, it is easy to dispose the electric motor at a low position. Therefore, it is easy to arrange the power unit at a low position.

In the straddled vehicle, the straddled vehicle preferably includes
a seat that is disposed above the power unit.

The seat is disposed above the power unit. As described above, it is easy to dispose the power unit at a low position. Therefore, it is easy to dispose the seat at a low position.

### BRIEF DESCRIPTION OF DRAWINGS

For the purpose of illustrating the present teaching, there are shown in the drawings several forms which are presently preferred.
Fig. 1 is a right side view of a straddled vehicle according to an embodiment.
Fig. 2 is a left side view of the straddled vehicle.
Fig. 3 is a schematic diagram illustrating a configuration of a continuously variable transmission.
Fig. 4 is a right side view of a part of the straddled vehicle.
Fig. 5 is a plan view of a part of the straddled vehicle.
Fig. 6 is a rear view of a part of the straddled vehicle.

### DETAILED DESCRIPTION

Hereinafter, a straddled vehicle 1 according to the present teaching will be described with reference to the drawings.

### 1. Schematic Configuration of Straddled Vehicle 1

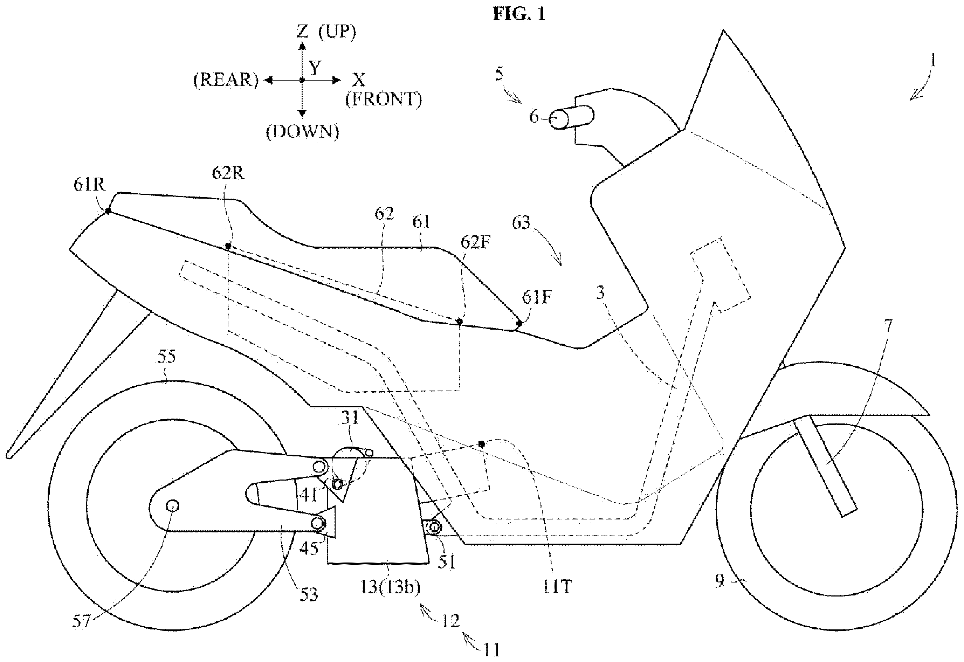

Fig. 1 is a right side view of the straddled vehicle 1 according to the embodiment. The straddled vehicle 1 is, for example, a scooter-type motorcycle.

Fig. 1 shows a longitudinal direction X, a transverse direction Y, and an up-down direction Z of the straddled vehicle 1. The longitudinal direction X, transverse direction Y, and up-down direction Z are defined with reference to a driver (also called a rider) riding the straddled vehicle 1. The longitudinal direction X, transverse direction Y, and up-down direction Z are perpendicular to one another. The longitudinal direction X and transverse direction Y are horizontal. The up-down direction Z is vertical.

The terms "forward", "rearward", "upward", "downward", "rightward", and "leftward", respectively, mean "forward", "rearward", "upward", "downward", "rightward", and "leftward" as seen from the driver mounted on the straddled vehicle 1. Unless otherwise stated in this specification, "forward" and "rearward" include not only directions parallel to the longitudinal direction X but also directions close to the longitudinal direction X. The directions close to the longitudinal direction X are, for example, directions at angles not exceeding 45 degrees to the longitudinal direction X. Similarly, unless otherwise specified, "rightward" and "leftward" include not only directions parallel to the transverse direction Y but also directions close to the transverse direction Y. Unless otherwise specified, "upward" and "downward" include not only directions parallel to the up-down direction Z but also directions close to the up-down direction Z. For reference, the drawings show the terms FRONT, REAR, UP, DOWN, RIGHT, and LEFT, as appropriate.

It is to be understood that, in this specification, various expressions describing arrangements have the following meanings, respectively. The following description will be made taking the transverse direction Y for example, and the same may apply to the longitudinal direction X and up-down direction Z.

The expression "Member Ma is located more rightward/leftward than Member Mb," defines a position in the transverse direction Y of Member Ma relative to Member Mb, and does not define a position in the longitudinal direction X or the up-down direction Z of Member Ma relative to Member Mb. In the case of this expression, Member Ma may, or may not, overlap Member Mb in a side view of the straddled vehicle 1.

The expression "Member Ma is located rightward/leftward of Member Mb," without reference to a looking direction defines a position in the transverse direction Y of Member Ma relative to Member Mb, a position in the longitudinal direction X of Member Ma relative to Member Mb, and a position in the up-down direction Z of Member Ma relative to Member Mb. This expression means that Member Ma is located more rightward/leftward than Member Mb, and that at least part of Member Ma overlaps at least part of Member Mb in a side view of the straddled vehicle 1.

The expression "Member Ma is located rightward/leftward of Member Mb in plan view of the straddled vehicle 1," defines a position in the transverse direction Y of Member Ma relative to Member Mb, and a position in the longitudinal direction X of Member Ma relative to Member Mb, and does not define a position in the up-down direction Z of Member Ma relative to Member Mb. This expression means that Member Ma is located more rightward/leftward than Member Mb, that a front end of Member Ma is positioned more forward than a rear end of Member Mb, and that a rear end of Member Ma is located more rearward than a front end of Member Mb.

The expression "Member Ma is located rightward/leftward of Member Mb in front view of the straddled vehicle 1," defines a position in the transverse direction Y of Member Ma relative to Member Mb, and a position in the up-down direction Z of Member Ma relative to Member Mb, and does not define a position in the longitudinal direction X of Member Ma relative to Member Mb. This expression means that Member Ma is located more rightward/leftward than Member Mb, that an upper end of Member Ma is positioned higher than a lower end of Member Mb, and that a lower end of Member Ma is located lower than an upper end of Member Mb.

In the present specification, "in side view of the straddled vehicle 1" is appropriately referred to as "in vehicle side view". Similarly, "in a plan view of the straddled vehicle 1" is appropriately referred to as "in vehicle plan view". "In rear view of the straddled vehicle 1" is appropriately referred to as "in vehicle rear view".

Fig. 1 will be referred. The straddled vehicle 1 includes a vehicle body frame 3.

The straddled vehicle 1 includes a steering device 5. The steering device 5 is supported by the vehicle body frame 3.

The steering device 5 includes a steering wheel 6 and a front fork 7. The front fork 7 is coupled to the steering wheel 6. The front fork 7 extends downward from the steering wheel 6.

The straddled vehicle 1 includes a front wheel 9. The front wheel 9 is supported by the steering device 5. The front wheel 9 is supported by the front fork 7. The front wheel 9 is disposed lower than the steering wheel 6.

The straddled vehicle 1 includes a power unit 11. The power unit 11 is supported by the vehicle body frame 3. For example, the power unit 11 is directly supported by the vehicle body frame 3.

The power unit 11 is disposed lower than the steering wheel 6. The power unit 11 is disposed more rearward than the front wheel 9.

The power unit 11 swings with respect to the vehicle body frame 3.

The straddled vehicle 1 includes a pivot shaft 51. The pivot shaft 51 is supported by the vehicle body frame 3. The pivot shaft 51 extends in the transverse direction Y. The pivot shaft 51 is disposed lower than the steering wheel 6. The pivot shaft 51 is disposed more rearward than the front wheel 9.

The power unit 11 is supported by the pivot shaft 51. The power unit 11 is supported by the vehicle body frame 3 via the pivot shaft 51. The power unit 11 swings about the pivot shaft 51. The power unit 11 swings with respect to the vehicle body frame 3 about the pivot shaft 51.

The straddled vehicle 1 includes a rear arm 53. The rear arm 53 is disposed lower than the steering wheel 6. The rear arm 53 is disposed more rearward than the front wheel 9.

The rear arm 53 swings with respect to the vehicle body frame 3.

The rear arm 53 is supported by the power unit 11. The rear arm 53 is supported by the vehicle body frame 3 via the power unit 11. The rear arm 53 is indirectly supported by the vehicle body frame 3.

The rear arm 53 is fixed to the power unit 11. The rear arm 53 swings integrally with the power unit 11. The rear arm 53 swings with respect to the vehicle body frame 3 integrally with the power unit 11. The rear arm 53 swings about the pivot shaft 51. The rear arm 53 swings with respect to the vehicle body frame 3 about the pivot shaft 51.

The power unit 11 includes a first support 41. The first support 41 supports the rear arm 53.

The rear arm 53 is supported by the first support 41. The rear arm 53 is fixed to the first support 41.

The power unit 11 includes a second support 45. For example, the second support 45 is disposed below the first support 41. The second support 45 supports the rear arm 53.

The rear arm 53 is supported by the second support 45. The rear arm 53 is fixed to the second support 45.

The power unit 11 includes an engine 12. The engine 12 generates power. The power of the engine 12 is, for example, rotational power. The engine 12 swings with respect to the vehicle body frame 3 about the pivot shaft 51.

The first support 41 is supported by the engine 12. The first support 41 is fixed to the engine 12. The first support 41 swings integrally with the engine 12.

The second support 45 is supported by the engine 12. The second support 45 is fixed to the engine 12. The second support 45 swings integrally with the engine 12.

The rear arm 53 is supported by the engine 12. The rear arm 53 is fixed to the engine 12. The rear arm 53 swings integrally with the engine 12.

The engine 12 includes a crankcase 13. The crankcase 13 accommodates a crankshaft (not illustrated). The crankshaft outputs power of the engine 12. The crankcase 13 swings with respect to the vehicle body frame 3 about the pivot shaft 51.

The first support 41 is disposed outside the crankcase 13. The first support 41 is supported by the crankcase 13. The first support 41 is fixed to the crankcase 13. The first support 41 swings integrally with the crankcase 13.

The second support 45 is disposed outside the crankcase 13. The second support 45 is supported by the crankcase 13. The second support 45 is fixed to the crankcase 13. The second support 45 swings integrally with the crankcase 13.

The rear arm 53 is disposed outside the crankcase 13. The rear arm 53 is supported by the crankcase 13. The rear arm 53 is fixed to the crankcase 13. The rear arm 53 swings integrally with the crankcase 13.

The power unit 11 includes an electric motor 31. The electric motor 31 is supported by the engine 12. The electric motor 31 is fixed to the engine 12. The electric motor 31 swings integrally with the engine 12.

The electric motor 31 overlaps the engine 12 in vehicle side view.

The electric motor 31 is disposed outside the crankcase 13. The entire electric motor 31 is disposed outside the crankcase 13. The electric motor 31 is supported by the crankcase 13. The electric motor 31 is fixed to the crankcase 13. The electric motor 31 is attached to the crankcase 13. The electric motor 31 swings integrally with the crankcase 13.

The electric motor 31 overlaps the crankcase 13 in vehicle side view. At least a part of the electric motor 31 overlaps the crankcase 13 in vehicle side view.

The electric motor 31 swings integrally with the first support 41.

The electric motor 31 overlaps the first support 41 in vehicle side view. At least a part of the electric motor 31 overlaps the first support 41 in vehicle side view.

The straddled vehicle 1 includes a rear wheel 55. The rear wheel 55 is supported by the rear arm 53. The rear wheel 55 is disposed lower than the steering wheel 6. The rear wheel 55 is disposed more rearward than the front wheel 9.

The straddled vehicle 1 includes a rear axle 57. The rear axle 57 is supported by the rear arm 53. The rear axle 57 extends in the transverse direction Y. The rear axle 57 supports the rear wheel 55.

The rear wheel 55 rotates about the rear axle 57.

The straddled vehicle 1 includes a seat 61. The seat 61 is disposed more rearward than the steering wheel 6. The seat 61 is disposed more rearward than the front wheel 9. The seat 61 is disposed above the power unit 11.

The straddled vehicle 1 includes a storage box 62. The storage box 62 is for storing a baggage. The baggage is, for example, a helmet. The storage box 62 is disposed more rearward than the steering wheel 6. The storage box 62 is disposed more rearward than the front wheel 9. The storage box 62 is disposed above the power unit 11. The storage box 62 is disposed below the seat 61.

The straddled vehicle 1 forms a recessed space 63. The recessed space 63 is an unoccupied space. The straddled vehicle 1 does not have a portion existing in the recessed space 63. The recessed space 63 is disposed behind the steering wheel 6 and in front of the seat 61. The recessed space 63 is located lower than the seat 61. At least a part of the recessed space 63 is located below the entire seat 61. The recessed space 63 is opened upward.

The driver of the straddled vehicle 1 grips the steering wheel 6. The driver sits on the seat 61. The recessed space 63 allows the driver to easily get on and off the straddled vehicle 1. For example, the driver easily gets on and off the straddled vehicle 1 by passing the driver's legs through the recessed space 63.

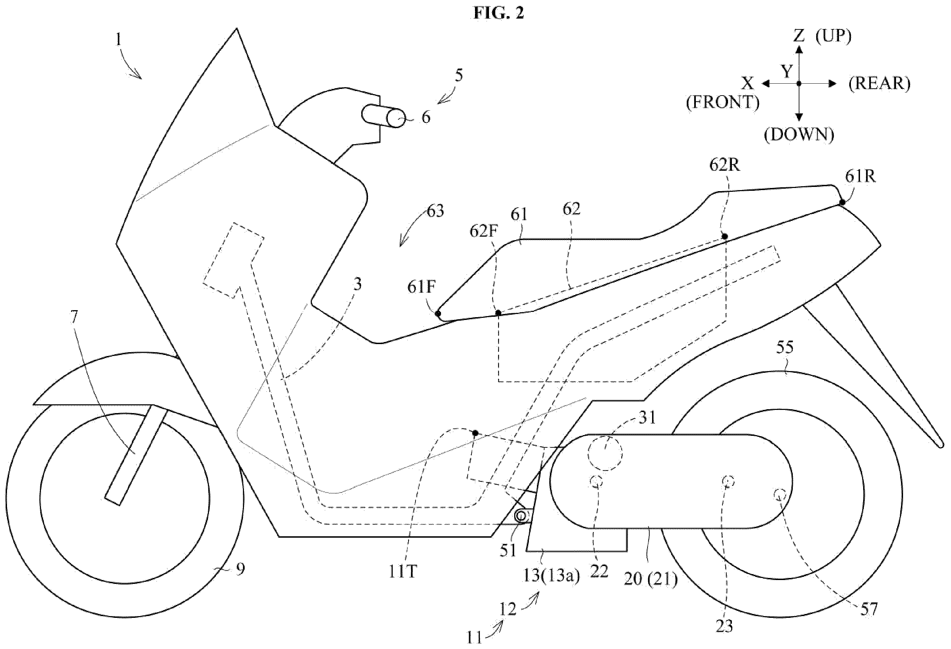

Fig. 2 is a left side view of the straddled vehicle 1 according to the embodiment. The power unit 11 supports the rear wheel 55. The power unit 11 supports a rear axle 57.

The power unit 11 includes a transmission case 20. The transmission case 20 swings about the pivot shaft 51. The transmission case 20 swings with respect to the vehicle body frame 3 about the pivot shaft 51.

The transmission case 20 is supported by the engine 12. The transmission case 20 is fixed to the engine 12. The transmission case 20 swings integrally with the engine 12.

The transmission case 20 is disposed outside the crankcase 13. The transmission case 20 is supported by the crankcase 13. The transmission case 20 is fixed to the crankcase 13. The transmission case 20 swings integrally with the crankcase 13.

The transmission case 20 swings integrally with the rear arm 53.

The transmission case 20 supports the rear wheel 55. The transmission case 20 supports the rear axle 57.

The transmission case 20 overlaps at least a part of the electric motor 31 in vehicle side view. For example, the transmission case 20 overlaps the entire electric motor 31 in vehicle side view.

The power unit 11 includes a continuously variable transmission 21. The continuously variable transmission 21 transmits the power of the engine 12 to the rear wheels 55. The continuously variable transmission 21 is installed inside the transmission case 20. The continuously variable transmission 21 is housed in the transmission case 20.

The gear ratio of the continuously variable transmission 21 varies depending on the electric motor 31.

The electric motor 31 is disposed outside the transmission case 20. The entire electric motor 31 is disposed outside the transmission case 20.

The first support 41 is also disposed outside the transmission case 20.

### 2. Continuously variable transmission 21

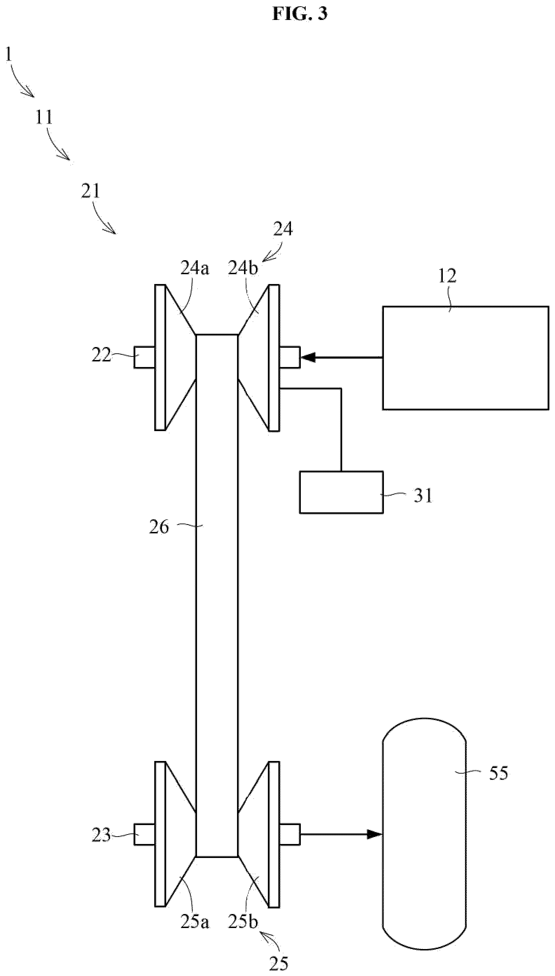

Fig. 3 is a schematic diagram illustrating a configuration of the continuously variable transmission 21.

The continuously variable transmission 21 includes a primary shaft 22 and a secondary shaft 23. The primary shaft 22 is directly or indirectly coupled to the engine 12. The primary shaft 22 is rotated by power of the engine 12. The primary shaft 22 rotates about an axis of the primary shaft 22. The rotational power of the primary shaft 22 is transmitted to the secondary shaft 23. The secondary shaft 23 is rotated by the rotational power of the primary shaft 22. The secondary shaft 23 rotates about the axis of the secondary shaft 23. The secondary shaft 23 is directly or indirectly coupled to the rear wheel 55. The rotational power of the secondary shaft 23 is transmitted to the rear wheel 55. The rear wheel 55 is rotated by the rotational power of the secondary shaft 23. The rear wheel 55 rotates about the rear axle 57.

When the continuously variable transmission 21 transmits rotational power from the primary shaft 22 to the secondary shaft 23, the continuously variable transmission 21 changes the gear ratio. The gear ratio is, for example, a ratio of the rotational speed of the primary shaft 22 and the rotational speed of the secondary shaft 23.

For example, the primary shaft 22 is coupled to the crankshaft. The primary shaft 22 is disposed coaxially with the crankshaft.

The continuously variable transmission 21 includes a primary pulley 24, a secondary pulley 25, and a belt 26. The primary pulley 24 is attached to the primary shaft 22. The primary pulley 24 rotates integrally with the primary shaft 22. The primary pulley 24 rotates about the axis of the primary shaft 22. The primary pulley 24 has a variable effective diameter. The secondary pulley 25 is attached to the secondary shaft 23. The secondary pulley 25 rotates integrally with the secondary shaft 23. The secondary pulley 25 rotates about the axis of the secondary shaft 23. The secondary pulley 25 has a variable effective diameter. The belt 26 is wrapped around the primary pulley 24 and the secondary pulley 25. The belt 26 runs between the primary pulley 24 and the secondary pulley 25. When the effective diameter of the primary pulley 24 increases, the effective diameter of the secondary pulley 25 decreases. When the effective diameter of the primary pulley 24 decreases, the effective diameter of the secondary pulley 25 increases.

The primary pulley 24 includes, for example, a first sheave 24a and a second sheave 24b. The first sheave 24a has, for example, a conical shape. The second sheave 24b has, for example, a conical shape. Each of the first sheave 24a and the second sheave 24b is attached to the primary shaft 22. The first sheave 24a rotates integrally with the primary shaft 22. The first sheave 24a rotates about the axis of the primary shaft 22. The second sheave 24b rotates integrally with the primary shaft 22. The second sheave 24b rotates about the axis of the primary shaft 22. The belt 26 is disposed between the first sheave 24a and the second sheave 24b. The belt 26 has a V-shaped cross section. The effective diameter of the primary pulley 24 depends on the separation distance between the first sheave 24a and the second sheave 24b on the axis of the primary shaft 22. The separation distance between the first sheave 24a and the second sheave 24b is variable. When the separation distance between the first sheave 24a and the second sheave 24b changes, the effective diameter of the primary pulley 24 changes.

At least one of the first sheave 24a and the second sheave 24b is movable along the axis of the primary shaft 22 with respect to the primary shaft 22. For example, the first sheave 24a is immovable along the axis of the primary shaft 22 with respect to the primary shaft 22. The first sheave 24a is fixed to the primary shaft 22. The second sheave 24b is movable along the axis of the primary shaft 22 with respect to the primary shaft 22.

The secondary pulley 25 has a structure similar to the structure of the primary pulley 24. For example, the secondary pulley 25 includes a first sheave 25a and a second sheave 25b. The first sheave 25a corresponds to the first sheave 24a. The second sheave 25b corresponds to the second sheave 24b. The relationship among the secondary shaft 23, the first sheave 25a, and the second sheave 25b is similar to the relationship among the primary shaft 22, the first sheave 24a, and the second sheave 24b.

For example, the electric motor 31 is coupled to the primary pulley 24. The electric motor 31 changes the effective diameter of the primary pulley 24.

For example, the electric motor 31 changes the separation distance between the first sheave 24a and the second sheave 24b in the axis of the primary shaft 22. The electric motor 31 is directly or indirectly coupled to the second sheave 24b. The electric motor 31 moves the second sheave 24b along the axis of the primary shaft 22 with respect to the primary shaft 22.

### 3. Layout of each element in vehicle side view

Fig. 1 will be referred.

The power unit 11 will be described.

The power unit 11 extends in the longitudinal direction X in vehicle side view.

The power unit 11 extends from a position more forward than the entire pivot shaft 51 to a position more rearward than the entire pivot shaft 51.

At least a part of the power unit 11 is disposed more forward than the entire rear arm 53.

At least a part of the power unit 11 is disposed more forward than the entire rear wheel 55.

At least a part of the power unit 11 is disposed more forward than the entire rear axle 57.

The power unit 11 is disposed below the seat 61. For example, the entire power unit 11 is disposed lower than the entire seat 61. In other words, the power unit 11 has an upper end 11T. The upper end 11T is disposed lower than the entire seat 61. The power unit 11 does not overlap the seat 61 in vehicle side view.

The power unit 11 is disposed below the storage box 62. For example, at least a part of the power unit 11 is disposed lower than the entire storage box 62. The power unit 11 includes a portion not overlapping the storage box 62 in vehicle side view.

The engine 12 will be described.

The engine 12 extends in the longitudinal direction X in vehicle side view.

The engine 12 extends from a position more forward than the entire pivot shaft 51 to a position more rearward than the entire pivot shaft 51.

At least a part of the engine 12 is disposed more forward than the entire rear arm 53.

The engine 12 is disposed in front of the rear wheel 55. For example, the entire engine 12 is disposed more forward than the entire rear wheel 55. The engine 12 does not overlap the rear wheel 55 in vehicle side view.

The engine 12 is disposed in front of the rear axle 57. The entire engine 12 is disposed more forward than the entire rear axle 57. The engine 12 does not overlap the rear axle 57 in vehicle side view.

The engine 12 is disposed below the seat 61. For example, the entire engine 12 is disposed lower than the entire seat 61. The engine 12 does not overlap the seat 61 in vehicle side view.

The seat 61 has a front end 61F and a rear end 61R. The entire engine 12 is disposed more rearward than the front end 61F. The entire engine 12 is disposed more forward than the rear end 61R.

The engine 12 is disposed below the storage box 62. For example, at least a part of the engine 12 is disposed lower than the entire storage box 62. The engine 12 includes a portion that does not overlap the storage box 62 in vehicle side view.

The storage box 62 has a front end 62F and a rear end 62R. For example, the engine 12 may include a portion located more forward than the front end 62F. The engine 12 may extend from a position more forward than the front end 62F to a position more rearward than the front end 62F. Alternatively, the engine 12 may not include a portion located more forward than the front end 62F. The entire engine 12 may be disposed more rearward than the front end 62F. The entire engine 12 is disposed more forward than the rear end 62R.

The crankcase 13 will be described.

The crankcase 13 is disposed behind the pivot shaft 51. At least a part of the crankcase 13 is located more rearward than the entire pivot shaft 51. For example, the entire crankcase 13 is located more rearward than the entire pivot shaft 51.

At least a part of the crankcase 13 is disposed more forward than the entire rear arm 53.

The crankcase 13 is disposed in front of the rear wheel 55. For example, the entire crankcase 13 is disposed more forward than the entire rear wheel 55. The crankcase 13 does not overlap the rear wheel 55 in vehicle side view.

The crankcase 13 is disposed in front of the rear axle 57. The entire crankcase 13 is disposed more forward than the entire rear axle 57. The crankcase 13 does not overlap the rear axle 57 in vehicle side view.

The crankcase 13 is disposed below the seat 61. For example, the entire crankcase 13 is disposed lower than the entire seat 61. The crankcase 13 does not overlap the seat 61 in vehicle side view.

The entire crankcase 13 is disposed more rearward than the front end 61F. The entire crankcase 13 is disposed more forward than the rear end 61R.

The crankcase 13 is disposed below the storage box 62. For example, at least a part of the crankcase 13 is disposed lower than the entire storage box 62. The crankcase 13 includes a portion that does not overlap the storage box 62 in vehicle side view.

The entire crankcase 13 is disposed more rearward than the front end 62F. The entire crankcase 13 is disposed more forward than the rear end 62R.

The electric motor 31 will be described.

The electric motor 31 is disposed behind the pivot shaft 51. At least a part of the electric motor 31 is located more rearward than the entire pivot shaft 51. For example, the entire electric motor 31 is located more rearward than the entire pivot shaft 51. The electric motor 31 does not overlap the pivot shaft 51 in vehicle side view.

At least a part of the electric motor 31 is disposed more forward than the entire rear arm 53. The electric motor 31 includes a portion that does not overlap the rear arm 53 in vehicle side view. For example, the entire electric motor 31 is disposed more forward than the entire rear arm 53. The electric motor 31 does not overlap the rear arm 53 in vehicle side view.

The electric motor 31 is disposed in front of the rear wheel 55. For example, the entire electric motor 31 is disposed more forward than the entire rear wheel 55. The electric motor 31 does not overlap the rear wheel 55 in vehicle side view.

The electric motor 31 is disposed in front of the rear axle 57. The entire electric motor 31 is disposed more forward than the entire rear axle 57. The electric motor 31 does not overlap the rear axle 57 in vehicle side view.

The electric motor 31 is disposed below the seat 61. For example, the entire electric motor 31 is disposed lower than the entire seat 61. The electric motor 31 does not overlap the seat 61 in vehicle side view.

The entire electric motor 31 is disposed more rearward than the front end 61F. The entire electric motor 31 is disposed more forward than the rear end 61R.

The electric motor 31 is disposed below the storage box 62. For example, at least a part of the electric motor 31 is disposed lower than the entire storage box 62. The electric motor 31 includes a portion that does not overlap the storage box 62 in vehicle side view.

The entire electric motor 31 is disposed more rearward than the front end 62F. The entire electric motor 31 is disposed more forward than the rear end 62R.

The first support 41 will be described.

The first support 41 is disposed behind the pivot shaft 51. At least a part of the first support 41 is located more rearward than the entire pivot shaft 51. For example, the entire first support 41 is located more rearward than the entire pivot shaft 51. The first support 41 does not overlap the pivot shaft 51 in vehicle side view.

At least a part of the first support 41 overlaps the rear arm 53 in vehicle side view.

The first support 41 is disposed in front of the rear wheel 55. For example, the entire first support 41 is disposed more forward than the entire rear wheel 55. The first support 41 does not overlap the rear wheel 55 in vehicle side view.

The first support 41 is disposed in front of the rear axle 57. For example, the entire first support 41 is disposed more forward than the entire rear axle 57. The first support 41 does not overlap the rear axle 57 in vehicle side view.

The first support 41 is disposed below the seat 61. For example, the entire first support 41 is disposed lower than the entire seat 61. The first support 41 does not overlap the seat 61 in vehicle side view.

The entire first support 41 is disposed more rearward than the front end 61F. The entire first support 41 is disposed more forward than the rear end 61R.

The first support 41 is disposed below the storage box 62. For example, at least a part of the first support 41 is disposed lower than the entire storage box 62. The first support 41 includes a portion that does not overlap the storage box 62 in vehicle side view.

The entire first support 41 is disposed more rearward than the front end 62F. The entire first support 41 is disposed more forward than the rear end 62R.

The position of the second support 45 is similar to the position of the first support 41. For example, the position of the second support 45 with respect to the pivot shaft 51 is substantially the same as the position of the first support 41 with respect to the pivot shaft 51. The position of the second support 45 with respect to the rear wheel 55, the rear axle 57, the seat 61, and the storage box 62 is substantially the same as the position of the first support 41 with respect to the rear wheel 55, the rear axle 57, the seat 61, and the storage box 62.

The pivot shaft 51 will be described.

The pivot shaft 51 is disposed in front of the rear arm 53. At least a part of the pivot shaft 51 is disposed more forward than the entire rear arm 53. For example, the entire pivot shaft 51 is disposed more forward than the entire rear arm 53. The pivot shaft 51 does not overlap the rear arm 53 in vehicle side view.

The pivot shaft 51 is disposed in front of the rear wheel 55. The entire pivot shaft 51 is disposed more forward than the entire rear wheel 55. The pivot shaft 51 does not overlap the rear wheel 55 in vehicle side view.

The pivot shaft 51 is disposed in front of the rear axle 57. The entire pivot shaft 51 is disposed more forward than the entire rear axle 57. The pivot shaft 51 does not overlap the rear axle 57 in vehicle side view.

The pivot shaft 51 is disposed below the seat 61. For example, the entire pivot shaft 51 is disposed lower than the entire seat 61. The pivot shaft 51 does not overlap the seat 61 in vehicle side view.

For example, the entire pivot shaft 51 is disposed more rearward than the front end 61F. The entire pivot shaft 51 is disposed more forward than the rear end 61R.

The pivot shaft 51 is disposed below the storage box 62. For example, the entire pivot shaft 51 is disposed lower than the entire storage box 62. The pivot shaft 51 does not overlap the storage box 62 in vehicle side view.

For example, the entire pivot shaft 51 is disposed more rearward than the front end 62F. The entire pivot shaft 51 is disposed more forward than the rear end 62R.

The rear arm 53 will be described.

The rear arm 53 extends in the longitudinal direction X.

The rear arm 53 extends rearward from the first support 41. The rear arm 53 extends rearward from the second support 45.

The rear arm 53 overlaps the rear wheel 55 in vehicle side view. The rear arm 53 extends forward from the rear wheel 55.

The rear arm 53 overlaps the rear axle 57 in vehicle side view. The rear arm 53 extends forward from the rear axle 57.

The rear arm 53 is disposed below the seat 61. For example, the entire rear arm 53 is disposed lower than the entire seat 61. The rear arm 53 does not overlap the seat 61 in vehicle side view.

The entire rear arm 53 is disposed more rearward than the front end 61F. For example, the entire rear arm 53 is disposed more forward than the rear end 61R.

The rear arm 53 is disposed below the storage box 62. For example, at least a part of the rear arm 53 is disposed lower than the entire storage box 62. The rear arm 53 includes a portion that does not overlap the storage box 62 in vehicle side view.

The entire rear arm 53 is disposed more rearward than the front end 62F. For example, the rear arm 53 extends from a position more forward than the rear end 62R to a position more rearward than the rear end 62R.

The rear wheel 55 will be described.

The rear wheel 55 is disposed below the seat 61. For example, the entire rear wheel 55 is disposed lower than the entire seat 61. The rear wheels 55 do not overlap the seat 61 in vehicle side view.

The entire rear wheel 55 is disposed more rearward than the front end 61F. For example, the rear wheel 55 extends from a position more forward than the rear end 61R to a position more rearward than the rear end 61R.

The rear wheel 55 is disposed below the storage box 62. For example, at least a part of the rear wheel 55 is disposed lower than the entire storage box 62. The rear wheel 55 does not overlap the storage box 62 in vehicle side view.

The entire rear wheel 55 is disposed more rearward than the front end 62F. For example, the rear wheel 55 extends from a position more forward than the rear end 62R to a position more rearward than the rear end 62R.

The rear axle 57 will be described.

The rear axle 57 is disposed below the seat 61. For example, the entire rear axle 57 is disposed lower than the entire seat 61. The rear axle 57 does not overlap the seat 61 in vehicle side view.

The entire rear axle 57 is disposed more rearward than the front end 61F. For example, the entire rear axle 57 is disposed more forward than the rear end 61R.

The rear axle 57 is disposed below the storage box 62. For example, at least a part of the rear axle 57 is disposed lower than the entire storage box 62. The rear axle 57 does not overlap the storage box 62 in vehicle side view.

The entire rear axle 57 is disposed more rearward than the front end 62F. For example, the entire rear axle 57 is disposed more rearward than the rear end 62R.

The seat 61 and the storage box 62 will be described.

The seat 61 extends in the longitudinal direction X. The seat 61 extends from the front end 61F to the rear end 61R.

The storage box 62 extends in the longitudinal direction X. The storage box 62 extends from the front end 62F to the rear end 62R.

The storage box 62 is disposed below the seat 61. For example, at least a part of storage box 62 is disposed lower than the entire seat 61. For example, the storage box 62 includes a portion that does not overlap the seat 61 in vehicle side view. For example, the storage box 62 includes another portion that overlaps the seat 61 in vehicle side view.

The entire storage box 62 is disposed more rearward than the front end 61F. The entire storage box 62 is disposed more forward than the rear end 61R.

Fig. 2 will be referred.

The transmission case 20 will be described.

The transmission case 20 extends in the longitudinal direction X in vehicle side view.

The transmission case 20 overlaps the engine 12 in vehicle side view. The transmission case 20 extends rearward from the engine 12.

At least a part of the transmission case 20 is disposed lower than the upper end 11T of the power unit 11. For example, the entire transmission case 20 is disposed lower than the upper end 11T of the power unit 11.

The transmission case 20 overlaps the crankcase 13 in vehicle side view. The transmission case 20 extends rearward from the crankcase 13.

The transmission case 20 overlaps the electric motor 31 in vehicle side view. For example, the transmission case 20 overlaps the entire electric motor 31 in vehicle side view.

The transmission case 20 is disposed behind the pivot shaft 51. At least a part of the transmission case 20 is located more rearward than the entire pivot shaft 51. For example, the entire transmission case 20 is located more rearward than the entire pivot shaft 51. The transmission case 20 does not overlap the pivot shaft 51 in vehicle side view.

The transmission case 20 overlaps the rear wheel 55 in vehicle side view. The transmission case 20 extends forward from the rear wheel 55.

The transmission case 20 overlaps the rear axle 57 in vehicle side view. The transmission case 20 extends forward from the rear axle 57.

The transmission case 20 is disposed below the seat 61. For example, the entire transmission case 20 is disposed lower than the entire seat 61. The transmission case 20 does not overlap the seat 61 in vehicle side view.

The entire transmission case 20 is disposed more rearward than the front end 61F. The entire transmission case 20 is disposed more forward than the rear end 61R.

The transmission case 20 is disposed below the storage box 62. For example, at least a part of the transmission case 20 is disposed lower than the entire storage box 62. The transmission case 20 includes a portion that does not overlap the storage box 62 in vehicle side view.

The entire transmission case 20 is disposed more rearward than the front end 62F. For example, the transmission case 20 extends from a position more forward than the rear end 62R to a position more rearward than the rear end 62R.

The primary shaft 22 will be described.

The primary shaft 22 extends, for example, in the transverse direction Y. The primary shaft 22 overlaps the transmission case 20 in vehicle side view. The entire primary shaft 22 overlaps the transmission case 20 in vehicle side view.

The primary shaft 22 overlaps the engine 12 in vehicle side view. The entire primary shaft 22 overlaps the engine 12 in vehicle side view.

The primary shaft 22 overlaps the crankcase 13 in vehicle side view. The entire primary shaft 22 overlaps the crankcase 13 in vehicle side view.

The primary shaft 22 is disposed below the electric motor 31. At least a part of the primary shaft 22 is disposed lower than the entire electric motor 31. For example, the entire primary shaft 22 is disposed lower than the entire electric motor 31. The primary shaft 22 does not overlap the electric motor 31 in vehicle side view.

For example, the front end of the primary shaft 22 is disposed more forward than the rear end of the electric motor 31. The rear end of the primary shaft 22 is disposed more rearward than the front end of the electric motor 31.

The primary shaft 22 is disposed in front of the rear wheel 55. The entire primary shaft 22 is disposed more forward than the entire rear wheel 55. The primary shaft 22 does not overlap the rear wheel 55 in vehicle side view.

The primary shaft 22 is disposed in front of the rear axle 57. The entire primary shaft 22 is disposed more forward than the entire rear axle 57. The primary shaft 22 does not overlap the rear axle 57 in vehicle side view.

The secondary shaft 23 will be described.

The secondary shaft 23 extends, for example, in the transverse direction Y. The secondary shaft 23 overlaps the transmission case 20 in vehicle side view. The entire secondary shaft 23 overlaps the transmission case 20 in vehicle side view.

The secondary shaft 23 is disposed behind the primary shaft 22. The entire secondary shaft 23 is disposed more rearward than the entire primary shaft 22. The secondary shaft 23 does not overlap the primary shaft 22 in vehicle side view.

The secondary shaft 23 is disposed behind the engine 12. For example, the entire secondary shaft 23 is disposed more rearward than the entire engine 12. The secondary shaft 23 does not overlap the engine 12 in vehicle side view.

The secondary shaft 23 is disposed behind the crankcase 13. For example, the entire secondary shaft 23 is disposed more rearward than the entire crankcase 13. The secondary shaft 23 does not overlap the crankcase 13 in vehicle side view.

The secondary shaft 23 is disposed below the electric motor 31. At least a part of the secondary shaft 23 is disposed lower than the entire electric motor 31. For example, the entire secondary shaft 23 is disposed lower than the entire electric motor 31. The secondary shaft 23 does not overlap the electric motor 31 in vehicle side view.

The secondary shaft 23 is disposed behind the electric motor 31. For example, the entire secondary shaft 23 is disposed more rearward than the entire electric motor 31.

The secondary shaft 23 overlaps the rear wheel 55 in vehicle side view. For example, at least a part of the secondary shaft 23 overlaps the rear wheel 55 in vehicle side view.

The secondary shaft 23 is disposed in front of the rear axle 57. The entire secondary shaft 23 is disposed more forward than the entire rear axle 57. The secondary shaft 23 does not overlap the rear axle 57 in vehicle side view.

Although not illustrated, the primary pulley 24 overlaps the transmission case 20 in vehicle side view. The secondary pulley 25 overlaps the transmission case 20 in vehicle side view. The belt 26 overlaps the transmission case 20 in vehicle side view.

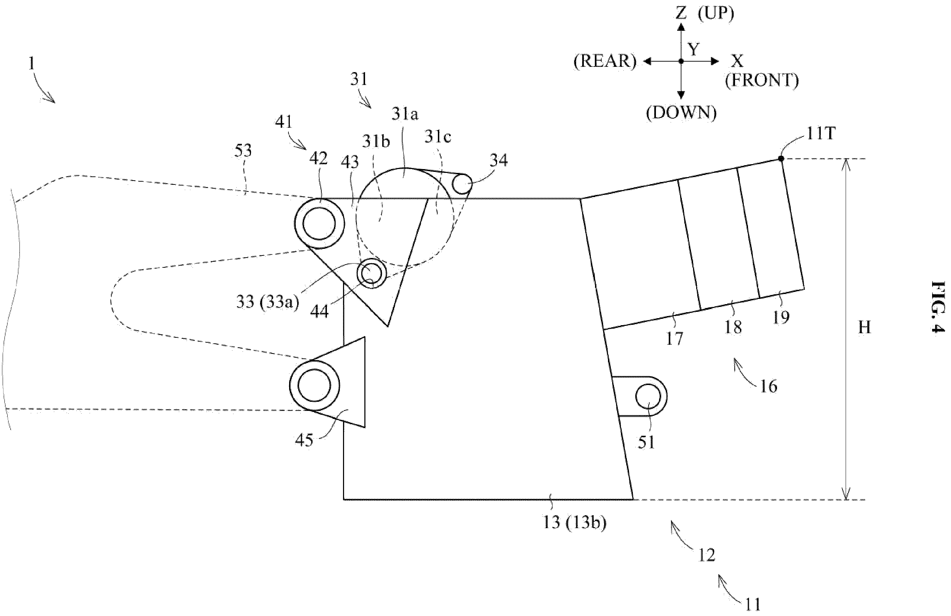

Fig. 4 is a right side view of a part of the straddled vehicle 1. Fig. 4 illustrates the rear arm 53 with a broken line.

The power unit 11 includes the cylinder unit 16. The engine 12 includes the cylinder unit 16. The cylinder unit 16 is connected to the crankcase 13.

The cylinder unit 16 includes a cylinder body 17, a cylinder head 18, and a head cover 19. The cylinder body 17 is connected to the crankcase 13. The cylinder head 18 is connected to the cylinder body 17. The head cover 19 is connected to the cylinder head 18.

The electric motor 31 is separable from the engine 12. The electric motor 31 is attachable to the engine 12 and detachable from the engine 12.

The electric motor 31 is separable from the crankcase 13. The electric motor 31 is attachable to the crankcase 13 and is detachable from the crankcase 13.

The power unit 11 includes a first bolt 33. The first bolt 33 fastens the electric motor 31 to the engine 12. The first bolt 33 fastens the electric motor 31 to the crankcase 13.

The first bolt 33 includes a head portion 33a.

The power unit 11 includes a second bolt 34. The second bolt 34 fastens the electric motor 31 to the engine 12. The second bolt 34 fastens the electric motor 31 to the crankcase 13.

The first support 41 cannot be separated from the engine 12. The first support 41 is formed integrally with the engine 12.

The first support 41 cannot be separated from the crankcase 13. The first support 41 is formed integrally with the crankcase 13.

The first support 41 includes a cylindrical portion 42. The cylindrical portion 42 has a cylindrical shape. The cylindrical portion 42 extends in the transverse direction Y. The cylindrical portion 42 is also called a boss. The cylindrical portion 42 is connected to the rear arm 53.

The first support 41 includes a plate portion 43. For example, the plate portion 43 has a substantially triangular shape in vehicle side view. The plate portion 43 extends in the longitudinal direction X in vehicle side view. The plate portion 43 extends from the crankcase 13 to the cylindrical portion 42. The plate portion 43 is connected to the crankcase 13. The plate portion 43 cannot be separated from the crankcase 13. The plate portion 43 is formed integrally with the crankcase 13. The plate portion 43 is connected to the cylindrical portion 42. The plate portion 43 cannot be separated from the cylindrical portion 42. The plate portion 43 is formed integrally with the cylindrical portion 42.

The first support 41 has a through hole 44. The through hole 44 is for inserting a tool (not illustrated). The tool fastens the first bolt 33 and loosens the first bolt 33. The through hole 44 penetrates the first support 41. The through hole 44 penetrates the plate portion 43. The through hole 44 is a space. The through hole 44 is an unoccupied space. The straddled vehicle 1 does not have a portion present in the through hole 44.

The second support 45 cannot be separated from the engine 12. The second support 45 is formed integrally with the engine 12.

The second support 45 cannot be separated from the crankcase 13. The second support 45 is formed integrally with the crankcase 13.

The second support 45 has a structure similar to the structure of the first support 41.

The layout of each element will be described.

The power unit 11 will be described.

The power unit 11 has a length H. The length H is the length of the power unit 11 in the up-down direction Z. One object of the present embodiment is to shorten the length H.

The cylinder unit 16 will be described.

The cylinder unit 16 extends in the longitudinal direction X in vehicle side view.

The cylinder unit 16 is disposed in front of the crankcase 13. The cylinder unit 16 extends forward from the crankcase 13. The cylinder unit 16 extends forward and upward from the crankcase 13.

The cylinder body 17 extends forward from the crankcase 13. The cylinder head 18 extends forward from the cylinder body 17. The head cover 19 extends forward from the cylinder head 18.

For example, the cylinder unit 16 includes the upper end 11T of the power unit 11. The head cover 19 includes the upper end 11T.

The cylinder unit 16 is disposed above the pivot shaft 51. For example, at least a part of the cylinder unit 16 is disposed higher than the entire pivot shaft 51. The cylinder unit 16 does not overlap the pivot shaft 51 in vehicle side view.

The cylinder unit 16 extends from a position more forward than the entire pivot shaft 51 to a position more rearward than the entire pivot shaft 51.

The entire cylinder unit 16 is disposed more forward than the entire rear arm 53. The cylinder unit 16 does not overlap the rear arm 53 in vehicle side view.

Although not illustrated, the entire cylinder unit 16 is disposed more forward than the entire rear wheel 55. The cylinder unit 16 does not overlap the rear wheel 55 in vehicle side view.

Although not illustrated, the entire cylinder unit 16 is disposed more forward than the entire rear axle 57. The cylinder unit 16 does not overlap the rear axle 57 in vehicle side view.

The first support 41 will be described.

The entire first support 41 is disposed lower than the upper end 11T.

The first support 41 is provided outside the crankcase 13.

The first support 41 is connected to the rear portion of the crankcase 13. The first support 41 protrudes from the crankcase 13. The first support 41 extends rearward from the crankcase 13. The first support 41 extends to a position more rearward than the entire crankcase 13. At least a part of the first support 41 is disposed more rearward than the entire crankcase 13.

Specifically, the plate portion 43 extends in the longitudinal direction X. The plate portion 43 is connected to the rear portion of the crankcase 13. The plate portion 43 extends rearward from the crankcase 13. The plate portion 43 extends forward from the cylindrical portion 42.

The cylindrical portion 42 is disposed behind the crankcase 13. For example, the entire cylindrical portion 42 is disposed more rearward than the entire crankcase 13. The cylindrical portion 42 does not overlap the crankcase 13 in vehicle side view.

The entire first support 41 is disposed more rearward than the entire cylinder unit 16 in vehicle side view. The first support 41 does not overlap the cylinder unit 16 in vehicle side view.

The through hole 44 is disposed more forward than the cylindrical portion 42. For example, the entire through hole 44 is disposed more forward than the entire cylindrical portion 42.

The through hole 44 is disposed lower than the cylindrical portion 42. For example, the entire through hole 44 is disposed lower than the entire cylindrical portion 42.

The second support 45 will be described.

The entire second support 45 is disposed lower than the upper end 11T.

The second support 45 is provided outside the crankcase 13.

The second support 45 is connected to the rear portion of the crankcase 13. The second support 45 protrudes from the crankcase 13. The second support 45 extends rearward from the crankcase 13. The second support 45 extends to a position more rearward than the entire crankcase 13. At least a part of the second support 45 is disposed more rearward than the entire crankcase 13.

The second support 45 is disposed below the first support 41. The entire second support 45 is disposed lower than the entire first support 41. The second support 45 does not overlap the first support 41 in vehicle side view.

The electric motor 31 will be described.

At least a part of the electric motor 31 is disposed lower than the upper end 11T. For example, the entire electric motor 31 is disposed lower than the upper end 11T.

At least a part of the electric motor 31 overlaps the engine 12 in vehicle side view.

The electric motor 31 is provided outside the crankcase 13.

The electric motor 31 is disposed above the crankcase 13.

At least a part of the electric motor 31 is disposed higher than the entire crankcase 13.

The electric motor 31 includes a portion that does not overlap the crankcase 13 in vehicle side view.

Specifically, the electric motor 31 includes a first portion 31a, a second portion 31b, and a third portion 31c. In Fig. 3, the first portion 31a is indicated by a solid line. In Fig. 3, the second portion 31b and the third portion 31c are indicated by broken lines. The second portion 31b is located below the first portion 31a. The third portion 31c is disposed below the first portion 31a. The third portion 31c is located in front of the second portion 31b. The first portion 31a does not overlap the crankcase 13 in vehicle side view. The first portion 31a is disposed higher than the crankcase 13. For example, the first portion 31a is disposed higher than the entire crankcase 13. The second portion 31b does not overlap the crankcase 13 in vehicle side view. The third portion 31c overlaps the crankcase 13 in vehicle side view.

The electric motor 31 is disposed behind the cylinder unit 16. At least a part of the electric motor 31 is located more rearward than the entire cylinder unit 16. For example, the entire electric motor 31 is located more rearward than the entire cylinder unit 16. The electric motor 31 does not overlap the cylinder unit 16 in vehicle side view.

The electric motor 31 is disposed in front of the first support 41. At least a part of the electric motor 31 is disposed more forward than the entire first support 41.

The electric motor 31 is disposed above the first support 41. At least a part of the electric motor 31 is disposed higher than the entire first support 41.

The electric motor 31 includes a portion that does not overlap the first support 41 in vehicle side view.

Specifically, the first portion 31a does not overlap the first support 41 in vehicle side view. The first portion 31a is disposed higher than first support 41. For example, the first portion 31a is disposed higher than the entire first support 41. The entire first portion 31a is disposed higher than the entire first support 41. The third portion 31c does not overlap the first support 41 in vehicle side view. The third portion 31c is disposed more forward than the first support 41. The second portion 31b overlaps the first support 41 in vehicle side view.

The electric motor 31 is disposed in front of the cylindrical portion 42. For example, the entire electric motor 31 is disposed more forward than the entire cylindrical portion 42. The electric motor 31 does not overlap the cylindrical portion 42 in vehicle side view.

The electric motor 31 is disposed at the same height position as the cylindrical portion 42. In other words, the electric motor 31 is disposed at the same position as the cylindrical portion 42 in the up-down direction Z.

At least a part of the electric motor 31 overlaps the plate portion 43 in vehicle side view. For example, the second portion 31b overlaps the plate portion 43 in vehicle side view.

The electric motor 31 is disposed in front of the plate portion 43. At least a part of the electric motor 31 is disposed more forward than the entire plate portion 43. For example, the third portion 31c is disposed more forward than the entire plate portion 43. The entire third portion 31c is disposed more forward than the entire plate portion 43. The third portion 31c does not overlap the plate portion 43 in vehicle side view.

The electric motor 31 is disposed above the plate portion 43. At least a part of the electric motor 31 is disposed higher than the entire plate portion 43. For example, the first portion 31a is disposed higher than the entire plate portion 43. The entire first portion 31a is disposed higher than the entire plate portion 43. The first portion 31a does not overlap the plate portion 43 in vehicle side view.

The electric motor 31 is disposed above the through hole 44. At least a part of the electric motor 31 is disposed higher than the entire through hole 44. For example, the entire electric motor 31 is disposed higher than the entire through hole 44. The electric motor 31 does not overlap the through hole 44 in vehicle side view.

The electric motor 31 is disposed more forward than the second support 45. At least a part of the electric motor 31 is disposed more forward than the entire second support 45. The electric motor 31 is disposed higher than the second support 45. At least a part of the electric motor 31 is disposed higher than the entire second support 45. The electric motor 31 does not overlap the second support 45 in vehicle side view.

The first bolt 33 will be described. In Fig. 4, the first bolt 33 is at a first fastening position. When the first bolt 33 is at the first fastening position, the first bolt 33 fastens the electric motor 31 to the crankcase 13.

When the first bolt 33 is at the first fastening position, at least a part of the first bolt 33 is disposed lower than the upper end 11T. For example, when the first bolt 33 is at the first fastening position, the entire first bolt 33 is disposed lower than the upper end 11T.

When the first bolt 33 is at the first fastening position, at least a part of the first bolt 33 is disposed at the same height position as the crankcase 13. For example, when the first bolt 33 is at the first fastening position, the entire first bolt 33 is disposed at the same height position as the crankcase 13.

When the first bolt 33 is at the first fastening position, at least a part of the first bolt 33 is disposed more rearward than the entire cylinder unit 16. For example, when the first bolt 33 is at the first fastening position, the entire first bolt 33 is disposed more rearward than the entire cylinder unit 16. When the first bolt 33 is at the first fastening position, the first bolt 33 does not overlap the cylinder unit 16.

When the first bolt 33 is at the first fastening position, the first bolt 33 is disposed in the vicinity of the electric motor 31 in vehicle side view. When the first bolt 33 is at the first fastening position, the first bolt 33 is disposed below and behind the electric motor 31 in vehicle side view. When the first bolt 33 is at the first fastening position, the first bolt 33 does not overlap the electric motor 31 in vehicle side view.

When the first bolt 33 is at the first fastening position, the first bolt 33 overlaps the first support 41 in vehicle side view. For example, when the first bolt 33 is at the first fastening position, the entire first bolt 33 overlaps the first support 41 in vehicle side view.

When the first bolt 33 is at the first fastening position, the first bolt 33 is disposed more forward than the cylindrical portion 42 in vehicle side view. For example, when the first bolt 33 is at the first fastening position, the entire first bolt 33 is disposed more forward than the entire cylindrical portion 42 in vehicle side view. When the first bolt 33 is at the first fastening position, the first bolt 33 is disposed lower than the cylindrical portion 42 in vehicle side view. For example, when the first bolt 33 is at the first fastening position, the entire first bolt 33 is disposed lower than the entire cylindrical portion 42 in vehicle side view. When the first bolt 33 is at the first fastening position, the first bolt 33 does not overlap the cylindrical portion 42 in vehicle side view.

When the first bolt 33 is at the first fastening position, the first bolt 33 overlaps the through hole 44 in vehicle side view. For example, when the first bolt 33 is at the first fastening position, the entire first bolt 33 overlaps the through hole 44 in vehicle side view.

In other words, when the first bolt 33 is at the first fastening position, the first bolt 33 is disposed at the same position as the through hole 44 in vehicle side view. For example, when the first bolt 33 is at the first fastening position, the entire first bolt 33 is disposed at the same position as the through hole 44 in vehicle side view.

When the first bolt 33 is at the first fastening position, the first bolt 33 is visually recognizable through the through hole 44 in vehicle side view. For example, when the first bolt 33 is at the first fastening position, the entire first bolt 33 is visually recognizable through the through hole 44 in vehicle side view.

When the first bolt 33 is at the first fastening position, the head portion 33a overlaps the through hole 44 in vehicle side view. For example, when the first bolt 33 is at the first fastening position, the entire head portion 33a overlaps the through hole 44 in vehicle side view.

In other words, when the first bolt 33 is at the first fastening position, the head portion 33a is disposed at the same position as the through hole 44 in vehicle side view. For example, when the first bolt 33 is at the first fastening position, the entire head portion 33a is disposed at the same position as the through hole 44 in vehicle side view.

When the first bolt 33 is at the first fastening position, the head portion 33a is visually recognizable through the through hole 44 in vehicle side view. For example, when the first bolt 33 is at the first fastening position, the entire head portion 33a is visually recognizable through the through hole 44 in vehicle side view.

When the first bolt 33 is at the first fastening position, the first bolt 33 is disposed more forward than the second support 45. When the first bolt 33 is at the first fastening position, at least a part of the first bolt 33 is disposed more forward than the entire second support 45. When the first bolt 33 is at the first fastening position, the first bolt 33 is disposed higher than the second support 45. When the first bolt 33 is at the first fastening position, at least a part of the first bolt 33 is disposed higher than the entire second support 45. When the first bolt 33 is at the first fastening position, the first bolt 33 does not overlap the second support 45 in vehicle side view.

When the first bolt 33 is at the first fastening position, at least a part of the first bolt 33 is disposed more rearward than the entire pivot shaft 51. For example, when the first bolt 33 is at the first fastening position, the entire first bolt 33 is disposed more rearward than the entire pivot shaft 51. When the first bolt 33 is at the first fastening position, the first bolt 33 does not overlap the pivot shaft 51.

When the first bolt 33 is at the first fastening position, at least a part of the first bolt 33 is disposed more forward than the entire rear arm 53. For example, when the first bolt 33 is at the first fastening position, the entire first bolt 33 is disposed more forward than the entire rear arm 53. When the first bolt 33 is at the first fastening position, the first bolt 33 does not overlap the rear arm 53.

The second bolt 34 will be described. In Fig. 4, the second bolt 34 is at a second fastening position. When the second bolt 34 is at the second fastening position, the second bolt 34 fastens the electric motor 31 to the crankcase 13.

When the second bolt 34 is at the second fastening position, at least a part of the second bolt 34 is disposed lower than the upper end 11T. For example, when the second bolt 34 is at the second fastening position, the entire second bolt 34 is disposed lower than the upper end 11T.

When the second bolt 34 is at the second fastening position, at least a part of the second bolt 34 is disposed higher than the entire crankcase 13. For example, when the second bolt 34 is at the second fastening position, the entire second bolt 34 is disposed higher than the entire crankcase 13. For example, when the second bolt 34 is at the second fastening position, the second bolt 34 does not overlap the crankcase 13 in vehicle side view.

When the second bolt 34 is at the second fastening position, at least a part of the second bolt 34 is disposed more rearward than the entire cylinder unit 16. For example, when the second bolt 34 is at the second fastening position, the entire second bolt 34 is disposed more rearward than the entire cylinder unit 16. When the second bolt 34 is at the second fastening position, the second bolt 34 does not overlap the cylinder unit 16 in vehicle side view.

When the second bolt 34 is at the second fastening position, the second bolt 34 is disposed in the vicinity of the electric motor 31 in vehicle side view. When the second bolt 34 is at the second fastening position, the second bolt 34 is disposed above and in front of the electric motor 31 in vehicle side view. When the second bolt 34 is at the second fastening position, the second bolt 34 does not overlap the electric motor 31 in vehicle side view.

When the second bolt 34 is at the second fastening position, the second bolt 34 is disposed more forward than the first bolt 33 in vehicle side view. For example, when the second bolt 34 is at the second fastening position, the entire second bolt 34 is disposed more forward than the entire first bolt 33 in vehicle side view. When the second bolt 34 is at the second fastening position, the second bolt 34 is disposed higher than the first bolt 33 in vehicle side view. For example, when the second bolt 34 is at the second fastening position, the entire second bolt 34 is disposed higher than the entire first bolt 33 in vehicle side view. When the second bolt 34 is at the second fastening position, the second bolt 34 does not overlap the first bolt 33 in vehicle side view.

When the first bolt 33 is at the first fastening position and the second bolt 34 is at the second fastening position, the second bolt 34 is disposed more forward than the first bolt 33 in vehicle side view. For example, when the first bolt 33 is at the first fastening position and the second bolt 34 is at the second fastening position, the entire second bolt 34 is disposed more forward than the entire first bolt 33 in vehicle side view. When the first bolt 33 is at the first fastening position and the second bolt 34 is at the second fastening position, the second bolt 34 is disposed higher than the first bolt 33 in vehicle side view. For example, when the first bolt 33 is at the first fastening position and the second bolt 34 is at the second fastening position, the entire second bolt 34 is disposed higher than the entire first bolt 33 in vehicle side view. When the first bolt 33 is at the first fastening position and the second bolt 34 is at the second fastening position, the second bolt 34 does not overlap the first bolt 33 in vehicle side view.

When the second bolt 34 is at the second fastening position, the second bolt 34 is disposed more forward than the first support 41 in vehicle side view. For example, when the second bolt 34 is at the second fastening position, the entire second bolt 34 is disposed more forward than the entire first support 41 in vehicle side view. When the second bolt 34 is at the second fastening position, the second bolt 34 is disposed higher than the first support 41 in vehicle side view. For example, when the second bolt 34 is at the second fastening position, the entire second bolt 34 is disposed higher than the entire first support 41 in vehicle side view. When the second bolt 34 is at the second fastening position, the second bolt 34 does not overlap the first support 41 in vehicle side view.

When the second bolt 34 is at the second fastening position, the second bolt 34 is disposed more forward than the through hole 44 in vehicle side view. For example, when the second bolt 34 is at the second fastening position, the entire second bolt 34 is disposed more forward than the entire through hole 44 in vehicle side view. When the second bolt 34 is at the second fastening position, the second bolt 34 is disposed higher than the through hole 44 in vehicle side view. For example, when the second bolt 34 is at the second fastening position, the entire second bolt 34 is disposed higher than the entire through hole 44 in vehicle side view. When the second bolt 34 is at the second fastening position, the second bolt 34 does not overlap the through hole 44 in vehicle side view.

When the second bolt 34 is at the second fastening position, the second bolt 34 is visually recognizable in vehicle side view. For example, when the second bolt 34 is at the second fastening position, the entire second bolt 34 is visually recognizable in vehicle side view.

When the second bolt 34 is at the second fastening position, the second bolt 34 is disposed more forward than the second support 45. When the second bolt 34 is at the second fastening position, the entire second bolt 34 is disposed more forward than the entire second support 45. When the second bolt 34 is at the second fastening position, the second bolt 34 is disposed higher than the second support 45. When the second bolt 34 is at the second fastening position, the entire second bolt 34 is disposed higher than the entire second support 45. When the second bolt 34 is at the second fastening position, the second bolt 34 does not overlap the second support 45 in vehicle side view.

When the second bolt 34 is at the second fastening position, at least a part of the second bolt 34 is disposed more rearward than the entire pivot shaft 51. For example, when the second bolt 34 is at the second fastening position, the entire second bolt 34 is disposed more rearward than the entire pivot shaft 51. When the second bolt 34 is at the second fastening position, the second bolt 34 does not overlap the pivot shaft 51 in vehicle side view.

When the second bolt 34 is at the second fastening position, at least a part of the second bolt 34 is disposed more forward than the entire rear arm 53. For example, when the second bolt 34 is at the second fastening position, the entire second bolt 34 is disposed more forward than the entire rear arm 53. When the second bolt 34 is at the second fastening position, the second bolt 34 does not overlap the rear arm 53 in vehicle side view.

### 4. Layout of each element in a vehicle plan view

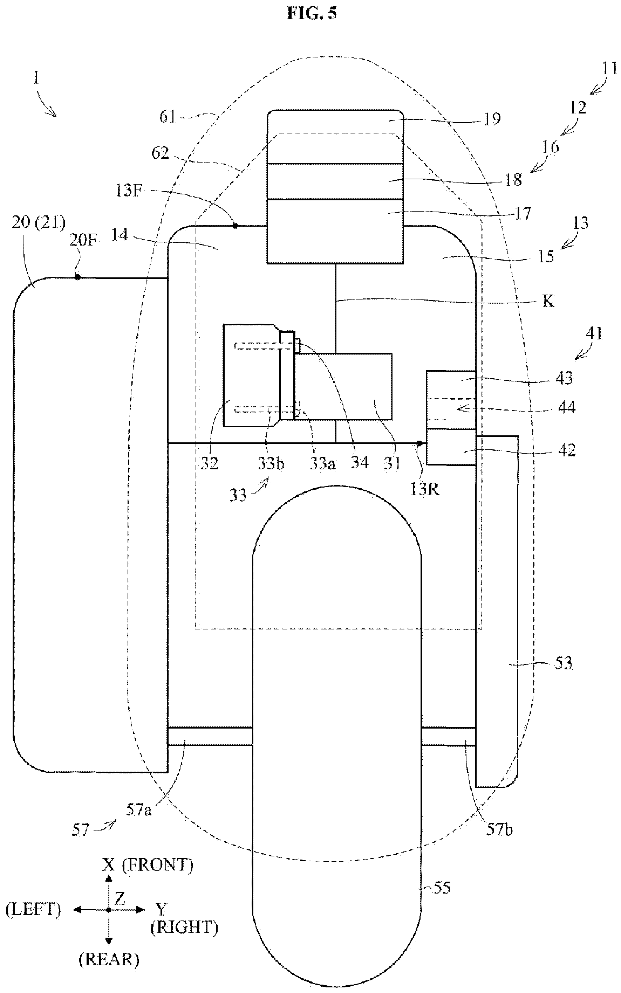

Fig. 5 is a plan view of a part of the straddled vehicle 1.

The crankcase 13 includes a first case 14 and a second case 15. The second case 15 is coupled to the first case 14.

Fig. 5 illustrates a boundary K. The boundary K is a line indicating a boundary between the first case 14 and the second case 15. The boundary K indicates, for example, a joint surface between the first case 14 and the second case 15.

The second case 15 is separable from the first case 14. The second case 15 is attachable to the first case 14. The second case 15 is detachable from the first case 14.

The cylinder unit 16 is connected to both the first case 14 and the second case 15. The cylinder body 17 is connected to both the first case 14 and the second case 15.

The transmission case 20 is connected to the engine 12. For example, the transmission case 20 is connected to the crankcase 13. The transmission case 20 is connected to the first case 14. The transmission case 20 is not connected to the second case 15.

The electric motor 31 is supported by the first case 14. The electric motor 31 is fixed to the first case 14. The electric motor 31 is attached to the first case 14.

The electric motor 31 is separable from the first case 14. The electric motor 31 is attachable to the first case 14. The electric motor 31 is detachable from the first case 14.

The electric motor 31 is not supported by the second case 15. The electric motor 31 is not connected to the second case 15.

The power unit 11 includes a motor support 32. The motor support 32 is supported by the first case 14. The motor support 32 is fixed to the first case 14.

The motor support 32 cannot be separated from the first case 14. The motor support 32 is formed integrally with the first case 14.

Fig. 5 illustrates the first bolt 33 at the first fastening position. The first bolt 33 fastens the electric motor 31 to the motor support 32.

Fig. 5 illustrates the second bolt 34 at the second fastening position. The second bolt 34 fastens the electric motor 31 to the motor support 32.

The first bolt 33 includes a shaft portion 33b. The shaft portion 33b has a first end connected to the head portion 33a.

The second bolt 34 has, for example, a structure similar to the structure of the first bolt 33.

The first support 41 is supported by the second case 15. The first support 41 is fixed to the second case 15.

The first support 41 cannot be separated from the second case 15. The first support 41 is formed integrally with the second case 15.

The first support 41 is not supported by the first case 14. The first support 41 is not connected to the first case 14.

The layout of each element will be described. In Fig. 5, the seat 61 and the storage box 62 are indicated by broken lines.

The power unit 11 will be described.

The power unit 11 does not overlap the rear wheel 55 in a vehicle plan view.

The power unit 11 overlaps the seat 61 in a vehicle plan view.

The power unit 11 overlaps the storage box 62 in a vehicle plan view.

The engine 12 will be described.

The engine 12 does not overlap the rear wheel 55 in a vehicle plan view.

At least a part of the engine 12 overlaps the seat 61 in a vehicle plan view.

At least a part of the engine 12 overlaps the storage box 62 in a vehicle plan view.

The crankcase 13 will be described.

The crankcase 13 does not overlap the rear wheel 55 in a vehicle plan view.

The crankcase 13 does not overlap the rear axle 57 in a vehicle plan view.

At least a part of the crankcase 13 overlaps the seat 61 in a vehicle plan view. For example, the entire crankcase 13 overlaps the seat 61 in a vehicle plan view. The entire first case 14 overlaps the seat 61 in a vehicle plan view. The entire second case 15 overlaps the seat 61 in a vehicle plan view.

At least a part of the crankcase 13 overlaps the storage box 62 in a vehicle plan view. For example, the entire crankcase 13 overlaps the storage box 62 in a vehicle plan view. The entire first case 14 overlaps the storage box 62 in a vehicle plan view. The entire second case 15 overlaps the storage box 62 in a vehicle plan view.

The first case 14 and the second case 15 are arranged in the transverse direction Y. The second case 15 is disposed rightward of the first case 14. For example, the entire second case 15 is disposed more rightward than the entire first case 14.

The boundary K extends in the longitudinal direction X.

The cylinder unit 16 will be described.

The entire cylinder unit 16 is disposed more forward than the entire rear wheel 55. The cylinder unit 16 does not overlap the rear wheel 55 in a vehicle plan view.

The entire cylinder unit 16 is disposed more forward than the entire rear axle 57. The cylinder unit 16 does not overlap the rear axle 57 in a vehicle plan view.

At least a part of the cylinder unit 16 overlaps the seat 61 in a vehicle plan view. For example, the entire cylinder unit 16 overlaps the seat 61 in a vehicle plan view.

At least a part of the cylinder unit 16 overlaps the storage box 62 in a vehicle plan view. For example, the cylinder unit 16 includes a portion overlapping the storage box 62 in a vehicle plan view. The cylinder unit 16 includes another portion that does not overlap the storage box 62 in a vehicle plan view.

The transmission case 20 will be described.

The transmission case 20 is disposed leftward of the engine 12.

The transmission case 20 is disposed leftward of the crankcase 13. For example, the entire transmission case 20 is disposed more leftward than the entire crankcase 13.

The transmission case 20 is disposed leftward of the first case 14. For example, the entire transmission case 20 is disposed more leftward than the entire first case 14.

The transmission case 20 is disposed leftward of the rear wheel 55. For example, the entire transmission case 20 is disposed more leftward than the entire rear wheel 55. The transmission case 20 does not overlap the rear wheel 55 in a vehicle plan view.

For example, the transmission case 20 includes a portion overlapping the seat 61 in a vehicle plan view.

At least a part of the transmission case 20 is disposed more leftward than the entire storage box 62. For example, the entire transmission case 20 is disposed more leftward than the entire storage box 62 in a vehicle plan view. The transmission case 20 does not overlap the storage box 62 in a vehicle plan view.

The rear arm 53 will be described.

The rear arm 53 is disposed rightward of the engine 12.

The rear arm 53 is disposed rightward of the crankcase 13.

The rear arm 53 is disposed rightward of the second case 15.

The rear arm 53 is disposed rightward of the rear wheel 55. For example, the entire rear arm 53 is disposed more rightward than the entire rear wheel 55. The rear arm 53 does not overlap the rear wheel 55 in a vehicle plan view.

For example, the rear arm 53 overlaps the seat 61 in a vehicle plan view.

For example, the rear arm 53 overlaps the storage box 62 in a vehicle plan view.

The rear wheel 55 and the rear axle 57 will be described.

The rear wheels 55 overlap the seat 61 in a vehicle plan view.

The rear wheel 55 overlaps the storage box 62 in a vehicle plan view.

The rear axle 57 overlaps the seat 61 in a vehicle plan view.

The rear axle 57 does not overlap the storage box 62 in a vehicle plan view.

The rear wheel 55 is supported at both ends. The rear axle 57 is supported at both ends of the rear axle 57.

The rear axle 57 has a first end 57a and a second end 57b. The first end 57a is supported by the power unit 11. The first end 57a is supported by the transmission case 20. The second end 57b is supported by the rear arm 53. The rear wheel 55 is disposed between the first end 57a and the second end 57b in the transverse direction Y. The rear wheel 55 is disposed rightward of the first end 57a. The rear wheel 55 is disposed leftward of the second end 57b.

The electric motor 31 will be described.

The entire electric motor 31 overlaps the engine 12 in a vehicle plan view.

At least a part of the electric motor 31 overlaps the crankcase 13 in a vehicle plan view. For example, the entire electric motor 31 overlaps the crankcase 13 in a vehicle plan view.

The crankcase 13 has a front end 13F and a rear end 13R. The entire electric motor 31 is disposed more rearward than the front end 13F. The entire electric motor 31 is disposed more forward than the rear end 13R.

The electric motor 31 is provided outside the first case 14.

The electric motor 31 is disposed above the first case 14.

At least a part of the electric motor 31 overlaps the first case 14 in a vehicle plan view. For example, the electric motor 31 includes a portion overlapping the first case 14 in a vehicle plan view.

The electric motor 31 is provided outside the second case 15.

The electric motor 31 is disposed above the second case 15.

The electric motor 31 includes another portion overlapping the second case 15 in a vehicle plan view.

The electric motor 31 intersects with the boundary K in a vehicle plan view.

The electric motor 31 does not overlap the cylinder unit 16 in a vehicle plan view.

The electric motor 31 is disposed rightward of the transmission case 20. The entire electric motor 31 is disposed more rightward than the entire transmission case 20. The electric motor 31 does not overlap the transmission case 20 in a vehicle plan view.

The transmission case 20 includes a front end 20F. At least a part of the electric motor 31 is disposed more rearward than the front end 20F. For example, the entire electric motor 31 is disposed more rearward than the front end 20F.

The electric motor 31 is disposed leftward of the rear arm 53. The entire electric motor 31 is disposed more leftward than the entire rear arm 53. The electric motor 31 does not overlap the rear arm 53 in a vehicle plan view.

The electric motor 31 is disposed between the transmission case 20 and the rear arm 53 in the transverse direction Y.

The electric motor 31 does not overlap the rear wheel 55 in a vehicle plan view.

The electric motor 31 does not overlap the rear axle 57 in a vehicle plan view.

The electric motor 31 overlaps the seat 61 in a vehicle plan view. For example, the entire electric motor 31 overlaps the seat 61 in a vehicle plan view.

The electric motor 31 overlaps the storage box 62 in a vehicle plan view. For example, the entire electric motor 31 overlaps the storage box 62 in a vehicle plan view.

The motor support 32 will be described.

For example, the entire motor support 32 overlaps the engine 12 in a vehicle plan view.

For example, the entire motor support 32 overlaps the crankcase 13 in a vehicle plan view.

For example, the entire motor support 32 overlaps the first case 14 in a vehicle plan view.

For example, the entire motor support 32 is disposed more leftward than the entire second case 15. The motor support 32 does not overlap the second case 15 in a vehicle plan view.

The motor support 32 does not overlap the cylinder unit 16 in a vehicle plan view.

For example, the entire motor support 32 is disposed more rightward than the entire transmission case 20. The motor support 32 does not overlap the transmission case 20 in a vehicle plan view.

The motor support 32 is disposed leftward of the electric motor 31. At least a part of the motor support 32 is disposed more leftward than the entire electric motor 31.

At least a part of the motor support 32 overlaps the seat 61 in a vehicle plan view. For example, the entire motor support 32 overlaps the seat 61 in a vehicle plan view.

At least a part of the motor support 32 overlaps the storage box 62 in a vehicle plan view. For example, the entire motor support 32 overlaps the storage box 62 in a vehicle plan view.

The first bolt 33 will be described.

Fig. 5 illustrates the first bolt 33 at the first fastening position.

When the first bolt 33 is at the first fastening position, at least a part of the first bolt 33 overlaps the engine 12 in a vehicle plan view. For example, when the first bolt 33 is at the first fastening position, the entire first bolt 33 overlaps the engine 12 in a vehicle plan view.

When the first bolt 33 is at the first fastening position, at least a part of the first bolt 33 overlaps the crankcase 13 in a vehicle plan view. For example, when the first bolt 33 is at the first fastening position, the entire first bolt 33 overlaps the crankcase 13 in a vehicle plan view.

When the first bolt 33 is at the first fastening position, the entire first bolt 33 is disposed more rearward than the front end 13F. When the first bolt 33 is at the first fastening position, the entire first bolt 33 is disposed more forward than the rear end 13R.

When the first bolt 33 is at the first fastening position, at least a part of the first bolt 33 overlaps the first case 14 in a vehicle plan view. For example, when the first bolt 33 is at the first fastening position, the entire first bolt 33 overlaps the first case 14 in a vehicle plan view.

When the first bolt 33 is at the first fastening position, at least a part of the first bolt 33 is disposed more leftward than the entire second case 15. For example, when the first bolt 33 is at the first fastening position, the entire first bolt 33 is disposed more leftward than the entire second case 15. When the first bolt 33 is at the first fastening position, the first bolt 33 does not overlap the second case 15 in a vehicle plan view.

When the first bolt 33 is at the first fastening position, at least a part of the first bolt 33 is disposed leftward of the boundary K. For example, when the first bolt 33 is at the first fastening position, the entire first bolt 33 is disposed leftward of the boundary K. When the first bolt 33 is at the first fastening position, the first bolt 33 does not intersect with the boundary K in a vehicle plan view.

When the first bolt 33 is at the first fastening position, the first bolt 33 does not overlap the cylinder unit 16 in a vehicle plan view.

When the first bolt 33 is at the first fastening position, at least a part of the first bolt 33 is disposed more rightward than the entire transmission case 20. For example, when the first bolt 33 is at the first fastening position, the entire first bolt 33 is disposed more rightward than the entire transmission case 20. When the first bolt 33 is at the first fastening position, the first bolt 33 does not overlap the transmission case 20 in a vehicle plan view.

When the first bolt 33 is at the first fastening position, at least a part of the first bolt 33 is disposed more leftward than the entire electric motor 31.

When the first bolt 33 is at the first fastening position, the first bolt 33 overlaps the motor support 32 in a vehicle plan view.

When the first bolt 33 is at the first fastening position, the first bolt 33 overlaps the seat 61 in a vehicle plan view.

When the first bolt 33 is at the first fastening position, the first bolt 33 overlaps the storage box 62 in a vehicle plan view.

When the first bolt 33 is at the first fastening position, the first bolt 33 extends in the transverse direction Y. When the first bolt 33 is at the first fastening position, the shaft portion 33b extends in the transverse direction Y.

When the first bolt 33 is at the first fastening position, the head portion 33a is disposed rightward of the shaft portion 33b. When the first bolt 33 is at the first fastening position, the entire head portion 33a is disposed more rightward than the entire shaft portion 33b.

When the first bolt 33 is at the first fastening position, the head portion 33a faces rightward. When the first bolt 33 is at the first fastening position, the head portion 33a does not face leftward. When the first bolt 33 is at the first fastening position, the head portion 33a does not face the transmission case 20.

The second bolt 34 will be described.

Fig. 5 illustrates the second bolt 34 at the second fastening position.

When the second bolt 34 is at the second fastening position, at least a part of the second bolt 34 overlaps the engine 12 in a vehicle plan view. For example, when the second bolt 34 is at the second fastening position, the entire second bolt 34 overlaps the engine 12 in a vehicle plan view.

When the second bolt 34 is at the second fastening position, at least a part of the second bolt 34 overlaps the crankcase 13 in a vehicle plan view. For example, when the second bolt 34 is at the second fastening position, the entire second bolt 34 overlaps the crankcase 13 in a vehicle plan view.

When the second bolt 34 is at the second fastening position, the entire second bolt 34 is disposed more rearward than the front end 13F. When the second bolt 34 is at the second fastening position, the entire second bolt 34 is disposed more forward than the rear end 13R.

When the second bolt 34 is at the second fastening position, at least a part of the second bolt 34 overlaps the first case 14 in a vehicle plan view. For example, when the second bolt 34 is at the second fastening position, the entire second bolt 34 overlaps the first case 14 in a vehicle plan view.

When the second bolt 34 is at the second fastening position, at least a part of the second bolt 34 is disposed more leftward than the entire second case 15. For example, when the second bolt 34 is at the second fastening position, the entire second bolt 34 is disposed more leftward than the entire second case 15. When the second bolt 34 is at the second fastening position, the second bolt 34 does not overlap the second case 15 in a vehicle plan view.

When the second bolt 34 is at the second fastening position, at least a part of the second bolt 34 is disposed leftward of the boundary K. For example, when the second bolt 34 is at the second fastening position, the entire second bolt 34 is disposed leftward of the boundary K. When the second bolt 34 is at the second fastening position, the second bolt 34 does not intersect with the boundary K in a vehicle plan view.

When the second bolt 34 is at the second fastening position, the second bolt 34 does not overlap the cylinder unit 16 in a vehicle plan view.

When the second bolt 34 is at the second fastening position, at least a part of the second bolt 34 is disposed more rightward than the entire transmission case 20. For example, when the second bolt 34 is at the second fastening position, the entire second bolt 34 is disposed more rightward than the entire transmission case 20. When the second bolt 34 is at the second fastening position, the second bolt 34 does not overlap the transmission case 20 in a vehicle plan view.

When the second bolt 34 is at the second fastening position, at least a part of the second bolt 34 is disposed more leftward than the entire electric motor 31.

When the second bolt 34 is at the second fastening position, the second bolt 34 overlaps the motor support 32 in a vehicle plan view.

When the first bolt 33 is at the first fastening position and the second bolt 34 is at the second fastening position, the second bolt 34 does not overlap the first bolt 33 in a vehicle plan view.

When the second bolt 34 is at the second fastening position, the second bolt 34 overlaps the seat 61 in a vehicle plan view.

When the second bolt 34 is at the second fastening position, the second bolt 34 overlaps the storage box 62 in a vehicle plan view.

When the second bolt 34 is at the second fastening position, the second bolt 34 extends in the transverse direction Y.

The second bolt 34 extends in parallel with the first bolt 33. The second bolt 34 is disposed at the same position as the first bolt 33 in the transverse direction Y.

The first support 41 will be described.

The first support 41 overlaps the engine 12 in a vehicle plan view.

The first support 41 overlaps the crankcase 13 in a vehicle plan view. At least a part of the first support 41 overlaps the crankcase 13 in a vehicle plan view.

The entire first support 41 is disposed more rearward than the front end 13F. The first support 41 extends from a position more forward than the rear end 13R to a position more rearward than the rear end 13R.

The first support 41 is provided outside the first case 14.

The entire first support 41 is disposed more rightward than the entire first case 14. The first support 41 does not overlap the first case 14 in a vehicle plan view.

The entire first support 41 is disposed rightward of the boundary K. The first support 41 does not intersect with the boundary K in a vehicle plan view.

The first support 41 is provided outside the second case 15.

The first support 41 is disposed above the second case 15.

At least a part of the first support 41 overlaps the second case 15 in a vehicle plan view.

The first support 41 protrudes from the second case 15. The first support 41 extends rearward from the second case 15.

The first support 41 does not overlap the cylinder unit 16 in a vehicle plan view.

The entire first support 41 is disposed rightward of the transmission case 20. The first support 41 does not overlap the transmission case 20 in a vehicle plan view.

At least a part of first support 41 is disposed more rearward than front end 20F. For example, the entire first support 41 is disposed more rearward than the front end 20F.

The first support 41 is disposed rightward of the electric motor 31. The entire first support 41 is disposed more rightward than the entire electric motor 31. The first support 41 does not overlap the electric motor 31 in a vehicle plan view.

The electric motor 31 and the first support 41 are arranged in the transverse direction Y. The first support 41 is disposed at the same position as the electric motor 31 in the longitudinal direction X.

The transmission case 20, the electric motor 31, and the first support 41 are arranged in the transverse direction Y. The electric motor 31 is disposed between the transmission case 20 and the first support 41 in the transverse direction Y.

The electric motor 31 and the first support 41 are separated from each other. The electric motor 31 and the first support 41 are not in contact with each other.

The first support 41 is disposed rightward of the first bolt 33. The entire first support 41 is disposed more rightward than the entire first bolt 33. The first support 41 does not overlap the first bolt 33 in a vehicle plan view.

The first bolt 33 and the first support 41 are arranged in the transverse direction Y. The first support 41 is disposed at the same position as the first bolt 33 in the longitudinal direction X.

The shaft portion 33b, the head portion 33a, and the first support 41 are arranged in the transverse direction Y. The head portion 33a is disposed between the shaft portion 33b and the first support 41 in the transverse direction Y.

The through hole 44 is disposed rightward of the first bolt 33. The entire through holes 44 are disposed more rightward than the entire first bolts 33.

The first bolt 33 and the through hole 44 are arranged in the transverse direction Y. The through hole 44 is disposed at the same position as the first bolt 33 in the longitudinal direction X.

The through hole 44 is disposed rightward of the head portion 33a. The entire through hole 44 is disposed more rightward than the entire head portion 33a.

The shaft portion 33b, the head portion 33a, and the through hole 44 are arranged in the transverse direction Y. The head portion 33a is disposed between the shaft portion 33b and the through hole 44 in the transverse direction Y.

The through hole 44 extends in the transverse direction Y.

When the first bolt 33 is at the first fastening position, the first bolt 33 is disposed on an extension line of the through hole 44. Therefore, it is easy to bring the tool into contact with the first bolt 33 by inserting the tool into the through hole 44. It is easy to bring the tool into contact with the head portion 33a by inserting the tool into the through hole 44. Therefore, it is easy to loosen the first bolt 33 by inserting the tool into the through hole 44. By inserting the tool into the through hole 44, it is also easy to fasten the first bolt 33. Therefore, the electric motor 31 is configured to be detachable from the first case 14 in a state where the second case 15 is coupled to the first case 14. The electric motor 31 is configured to be attachable to the first case 14 in a state where the second case 15 is coupled to the first case 14.

Even in a state where the second case 15 is separated from the first case 14, the electric motor 31 is configured to be detachable from the first case 14. Even in a state where the second case 15 is separated from the first case 14, the electric motor 31 is configured to be attachable to the first case 14.

As described above, the head portion 33a does not face the transmission case 20. In other words, the shaft portion 33b is disposed between the transmission case 20 and the head portion 33a in the transverse direction Y. Therefore, the transmission case 20 does not obstruct loosening of the first bolt 33. The transmission case 20 does not obstruct fastening of the first bolt 33. Therefore, the electric motor 31 is configured to be detachable from the first case 14 in a state where the transmission case 20 is coupled to the crankcase 13. The electric motor 31 is configured to be attachable to the first case 14 in a state where the transmission case 20 is coupled to the crankcase 13.

Even in a state where the transmission case 20 is separated from the crankcase 13, the electric motor 31 is configured to be detachable from the first case 14. Even in a state where the transmission case 20 is separated from the crankcase 13, the electric motor 31 is configured to be attachable to the first case 14.

At least a part of the first support 41 is disposed more rightward than the rear wheel 55. The first support 41 does not overlap the rear wheel 55 in a vehicle plan view.

The first support 41 does not overlap the rear axle 57 in a vehicle plan view.

The first support 41 overlaps the seat 61 in a vehicle plan view. For example, the entire first support 41 overlaps the seat 61 in a vehicle plan view.

The first support 41 overlaps the storage box 62 in a vehicle plan view. For example, the entire first support 41 overlaps the storage box 62 in a vehicle plan view.

### 5. Layout of each element in vehicle rear view

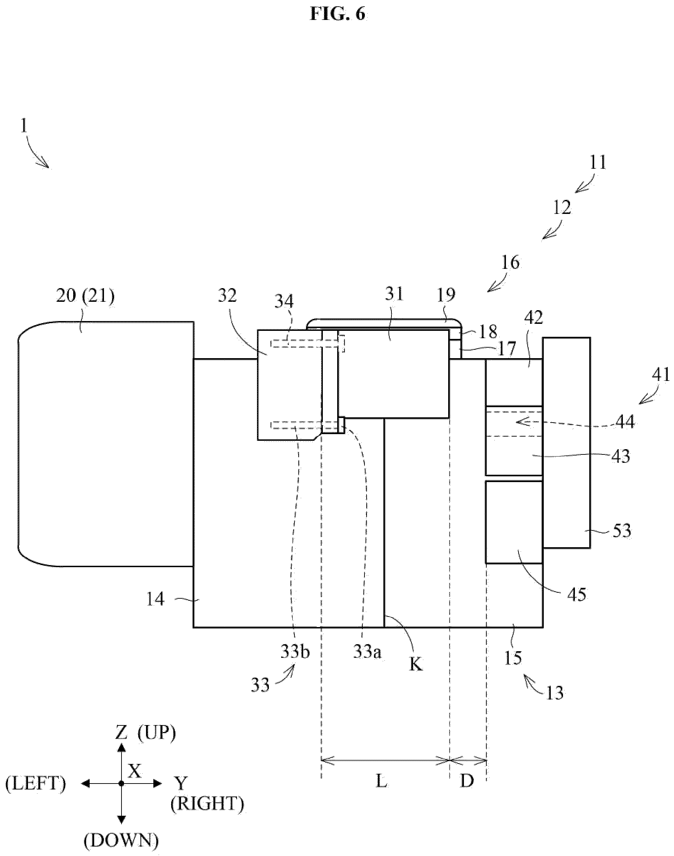

Fig. 6 is a rear view of a part of the straddled vehicle 1. The layout of each element will be described.

The electric motor 31 will be described.

The electric motor 31 overlaps the engine 12 in vehicle rear view.

The electric motor 31 overlaps the crankcase 13 in vehicle rear view.

The electric motor 31 overlaps the first case 14 in vehicle rear view.

The electric motor 31 overlaps the second case 15 in vehicle rear view.

The electric motor 31 intersects with the boundary K in vehicle rear view.

The electric motor 31 does not overlap the transmission case 20 in vehicle rear view.

The first bolt 33 will be described.

Fig. 6 illustrates the first bolt 33 at the first fastening position.

When the first bolt 33 is at the first fastening position, the first bolt 33 overlaps the engine 12 in vehicle rear view.

When the first bolt 33 is at the first fastening position, the first bolt 33 overlaps the crankcase 13 in vehicle rear view.

When the first bolt 33 is at the first fastening position, the first bolt 33 overlaps the first case 14 in vehicle rear view.

When the first bolt 33 is at the first fastening position, the first bolt 33 does not overlap the second case 15 in vehicle rear view.

When the first bolt 33 is at the first fastening position, the first bolt 33 does not intersect with the boundary K in vehicle rear view.

When the first bolt 33 is at the first fastening position, the first bolt 33 does not overlap the cylinder unit 16 in vehicle rear view.

When the first bolt 33 is at the first fastening position, the first bolt 33 does not overlap the transmission case 20 in vehicle rear view.

When the first bolt 33 is at the first fastening position, for example, the first bolt 33 overlaps the electric motor 31 in vehicle rear view.

The second bolt 34 will be described.

Fig. 6 illustrates the second bolt 34 at the second fastening position.

When the second bolt 34 is at the second fastening position, the second bolt 34 overlaps the engine 12 in vehicle rear view.

When the second bolt 34 is at the second fastening position, the second bolt 34 does not overlap the crankcase 13 in vehicle rear view.

When the second bolt 34 is at the second fastening position, the second bolt 34 does not overlap the first case 14 in vehicle rear view.

When the second bolt 34 is at the second fastening position, the second bolt 34 does not overlap the second case 15 in vehicle rear view.

When the second bolt 34 is at the second fastening position, the second bolt 34 does not intersect with the boundary K in vehicle rear view.

When the second bolt 34 is at the second fastening position, the second bolt 34 overlaps the cylinder unit 16 in vehicle rear view.

When the second bolt 34 is at the second fastening position, the second bolt 34 does not overlap the transmission case 20 in vehicle rear view.

When the second bolt 34 is at the second fastening position, for example, the second bolt 34 overlaps the electric motor 31 in vehicle rear view.

When the first bolt 33 is at the first fastening position and the second bolt 34 is at the second fastening position, the second bolt 34 does not overlap the first bolt 33 in vehicle rear view.

The first support 41 will be described.

The first support 41 overlaps the engine 12 in vehicle rear view.

The first support 41 overlaps the crankcase 13 in vehicle rear view.

The first support 41 does not overlap the first case 14 in vehicle rear view.

The first support 41 overlaps the second case 15 in vehicle rear view.

The first support 41 does not intersect with the boundary K in vehicle rear view.

The first support 41 does not overlap the transmission case 20 in vehicle rear view.

The first support 41 does not overlap the electric motor 31 in vehicle rear view.

When the first bolt 33 is at the first fastening position, the first support 41 does not overlap the first bolt 33 in vehicle rear view.

When the second bolt 34 is at the second fastening position, the first support 41 does not overlap the second bolt 34 in vehicle rear view.

The through hole 44 is disposed at the same height position as the first bolt 33. In other words, the through hole 44 is disposed at the same position as the first bolt 33 in the up-down direction Z.

The through hole 44 is disposed lower than the second bolt 34.

Fig. 6 illustrates a separation distance D. The separation distance D is a separation distance between the electric motor 31 and the first support 41 in the transverse direction Y. The separation distance D is relatively short. In a state where the second case 15 is coupled to the first case 14, the separation distance D is short. In a state where the second case 15 is coupled to the first case 14 and the electric motor 31 is fixed to the engine 12, the separation distance D is short.

The electric motor 31 has a length L. The length L is the length of the electric motor 31 in the transverse direction Y. The separation distance D is smaller than the length L.

For example, the separation distance D is smaller than the length of the first bolt 33.

For example, the separation distance D is smaller than a length of a tool for fastening the first bolt 33 and loosening the first bolt 33.

Although the separation distance D is short, it is easy to loosen the first bolt 33 by inserting the tool into the through hole 44. Although the separation distance D is short, it is also easy to fasten the first bolt 33 by inserting the tool into the through hole 44. Therefore, even when the separation distance D is short, it is easy to detach the electric motor 31 from the first case 14 in a state where the second case 15 is coupled to the first case 14. Even when the separation distance D is short, it is easy to attach the electric motor 31 to the first case 14 in a state where the second case 15 is coupled to the first case 14.

### 6. Effects

The straddled vehicle 1 includes a vehicle body frame 3, a power unit 11, a rear arm 53, and a rear wheel 55. The power unit 11 swings with respect to the vehicle body frame 3. The rear arm 53 swings with respect to the vehicle body frame 3. The rear wheel 55 is supported by the power unit 11 and the rear arm 53. Therefore, the rear wheel 55 is supported at both ends.

The power unit 11 includes an engine 12, a continuously variable transmission 21, an electric motor 31, and a first support 41. The engine 12 generates power. The continuously variable transmission 21 transmits the power of the engine 12 to the rear wheels 55. The electric motor 31 changes the gear ratio of the continuously variable transmission 21. The first support 41 supports the rear arm 53. At least a part of the electric motor 31 overlaps the first support 41 in vehicle side view. Therefore, it is easy to shorten the length H of the power unit 11 in the up-down direction Z.

In summary, the straddled vehicle 1 includes the power unit 11 and the rear wheel 55. The power unit 11 includes the continuously variable transmission 21 and the electric motor 31. The rear wheel 55 is supported at both ends. In order to support the rear wheel 55 at both ends thereof, the power unit 11 further includes the first support 41. Here, at least a part of the electric motor 31 overlaps the first support 41 in vehicle side view. Therefore, although the power unit 11 includes the continuously variable transmission 21, the electric motor 31, and the first support 41, it is easy to shorten the length H. As a result, for example, it is easy to arrange the power unit 11 at a low position. It is easy to lower the position of the power unit 11. For example, it is easy to arrange the upper end 11T at a low position. It is easy to lower the position of the upper end 11T.

The engine 12 includes a crankcase 13. The crankcase 13 is disposed in front of the rear wheel 55. The electric motor 31 is disposed outside the crankcase 13. Therefore, it is easy to install the electric motor 31.

The first support 41 is disposed outside the crankcase 13. Therefore, it is easy for the first support 41 to support the rear arm 53.

The electric motor 31 is disposed above the crankcase 13. Thus, the position of the electric motor 31 is not excessively low. Therefore, it is easier to install the electric motor 31.

As described above, the electric motor 31 is disposed above the crankcase 13. Thus, the position of the electric motor 31 is not excessively low. Therefore, it is easy to install the electric wiring for the electric motor 31. It is easy to connect the electric wiring to the electric motor 31.

The first support 41 includes the cylindrical portion 42 and the plate portion 43. The cylindrical portion 42 has a cylindrical shape. The cylindrical portion 42 is connected to the rear arm 53. The plate portion 43 extends from the crankcase 13 to the cylindrical portion 42. Therefore, it is easy for the first support 41 to support the rear arm 53.

At least a part of the electric motor 31 overlaps the plate portion 43 in vehicle side view. Therefore, it is easy for at least a part of the electric motor 31 to overlap the first support 41 in vehicle side view.

The electric motor 31 is attached to the crankcase 13. Therefore, it is easy to install the electric motor 31.

The crankcase 13 includes a first case 14 and a second case 15. The second case 15 is coupled to the first case 14. The electric motor 31 is fixed to the first case 14. The first support 41 is fixed to the second case 15. Therefore, it is easy to prevent interference between the electric motor 31 and the first support 41.

The electric motor 31 is configured to be detachable from the first case 14 in a state where the second case 15 is coupled to the first case 14. Therefore, when removing the electric motor 31 from the first case 14, it is not necessary to separate the second case 15 from the first case 14. Therefore, it is easy to remove the electric motor 31 from the first case 14.

The straddled vehicle 1 includes the first bolt 33. When the first bolt 33 is at the first fastening position, the first bolt 33 fastens the electric motor 31 to the crankcase 13. Therefore, when the first bolt 33 is at the first fastening position, the electric motor 31 is attached to the crankcase 13. The electric motor 31 is removable from the crankcase 13.

The first support 41 has a through hole 44. The through hole 44 is for inserting a tool. The tool fastens the first bolt 33. That is, the through hole 44 is for inserting a tool that fastens the first bolt 33 at the first fastening position. The tool loosens the first bolt 33. That is, the through hole 44 is for inserting a tool that loosens the first bolt 33 at the first fastening position. Therefore, it is easy to fasten the first bolt 33. Specifically, when the first bolt 33 is at the first fastening position, it is easy to fasten the first bolt 33. It is easy to loosen the first bolt 33. Specifically, when the first bolt 33 is at the first fastening position, it is easy to loosen the first bolt 33. Therefore, it is easy to attach the electric motor 31 to the crankcase 13. It is easy to remove the electric motor 31 from the crankcase 13.

When the first bolt 33 is at the first fastening position, the first bolt 33 is visually recognizable through the through hole 44 in vehicle side view. Therefore, it is easy for the tool to come into contact with the first bolt 33 through the through hole 44. Specifically, when the first bolt 33 is at the first fastening position, it is easy for the tool to come into contact with the first bolt 33 through the through hole 44.

The through hole 44 extends in the transverse direction Y. Therefore, the first bolt 33 can be easily visually recognizable through the through hole 44 in vehicle side view. Specifically, when the first bolt 33 is at the first fastening position, the first bolt 33 is easily visually recognizable through the through hole 44 in vehicle side view.

When the first bolt 33 is at the first fastening position, the first bolt 33 extends in the transverse direction Y. Therefore, it is easy for the tool to fasten the first bolt 33 and loosen the first bolt 33 through the through hole 44. Specifically, when the first bolt 33 is at the first fastening position, it is easy for the tool to fasten the first bolt 33 and loosen the first bolt 33 through the through hole 44.

The separation distance D is smaller than the length L. Therefore, the separation distance D is relatively small. Therefore, it is easy to reduce the size of the power unit 11. For example, it is easy to shorten the length of the power unit 11 in the transverse direction Y.

Even in a case where the separation distance D is small, it is easy to remove the electric motor 31 from the crankcase 13 using the through hole 44. Even in a case where the separation distance D is small, it is easy to attach the electric motor 31 to the crankcase 13 using the through hole 44. Rather, in a case where the separation distance D is small, the effect of the through hole 44 is more remarkable.

The power unit 11 includes a transmission case 20. The transmission case 20 houses the continuously variable transmission 21. The electric motor 31 is disposed between the transmission case 20 and the first support 41 in the transverse direction Y. Therefore, it is easy to dispose the electric motor 31 at a low position. It is easy to lower the position of the electric motor 31. Therefore, it is easy to arrange the power unit 11 at a low position. It is easy to lower the position of the power unit 11.

At least a part of the electric motor 31 overlaps the transmission case 20 in vehicle side view. Therefore, it is easy to dispose the electric motor 31 at a low position. It is easy to lower the position of the electric motor 31. Therefore, it is easy to arrange the power unit 11 at a low position. It is easy to lower the position of the power unit 11.

The straddled vehicle 1 includes a seat 61. The seat 61 is disposed above the power unit 11. As described above, it is easy to dispose the power unit 11 at a low position. It is easy to lower the position of the power unit 11. Therefore, it is easy to dispose the seat 61 at a low position. It is easy to lower the position of the seat 61. Therefore, it is easy for the driver of the straddled vehicle 1 to reach the ground with the foot of the driver. That is, it is easy to improve the foot grounding property of the straddled vehicle 1.

The straddled vehicle 1 includes a storage box 62. The storage box 62 is disposed above the power unit 11. The storage box 62 is disposed below the seat 61. As described above, it is easy to dispose the power unit 11 at a low position. It is easy to lower the position of the power unit 11. Therefore, it is easy to enlarge the storage box 62.

### 7. Modified Embodiments

The preferred embodiment can be modified as follows.
(1) For example, the electric motor 31 may be coupled to at least one of the primary pulley 24 and the secondary pulley 25. The electric motor 31 may change at least one of the effective diameter of the primary pulley 24 and the effective diameter of the secondary pulley 25.

For example, the electric motor 31 may be coupled to at least one of the first sheave 24a and the second sheave 24b.

For example, the electric motor 31 may be coupled to at least one of the first sheave 25a and the second sheave 25b. The electric motor 31 may change the separation distance between the first sheave 25a and the second sheave 25b on the axis of the secondary shaft 23.

(2) For example, the entire electric motor 31 may be disposed more rearward than the entire primary shaft 22.

Alternatively, the entire electric motor 31 may be disposed more forward than the entire primary shaft 22.

For example, at least a part of the electric motor 31 may be disposed lower than the entire primary shaft 22.

(3) For example, the pivot shaft 51 may be disposed above the crankcase 13.

For example, the pivot shaft 51 may be disposed above the cylinder unit 16.

(4) In the embodiments, the number of front wheels 9 is one. Alternatively, the number of front wheels 9 may be two. In the embodiments, the number of rear wheels 55 is one. Alternatively, the number of rear wheels 55 may be two.

(5) In the embodiments, a scooter-type vehicle as the straddled vehicle 1 has been exemplified. Alternatively, the straddled vehicle 1 may be changed to other types of vehicles such as a street type, a sports type, an off-road type, and an all-terrain vehicle.

(6) In the embodiments and the modifications described in the above (1) to (5), each configuration may be appropriately changed by further replacing or combining each configuration with a configuration of another modification.

### Reference Signs List

1: Straddled vehicle
3: Vehicle body frame
11: Power unit
12: Engine
13: Crankcase
14: First case
15: Second case
20: Transmission case
21: Continuously variable transmission
31: Electric motor
32: Motor support
33: First bolt
33a: Head portion
33b: Shaft portion
41: First support
42: Cylindrical portion
43: Plate portion
44: Through hole
51: Pivot shaft
53: Rear arm
55: Rear wheel
57: Rear axle
61: Seat
62: Storage box
H: Length of power unit in up-down direction
D: Separation distance between electric motor and first support in transverse direction
L: Length of electric motor in transverse direction
K: Boundary between first case and second case
X: Longitudinal direction of straddled vehicle
Y: Transverse direction of straddled vehicle
Z: Up-down direction of straddled vehicle

## Claims

1. A straddled vehicle (1) comprising:
a vehicle body frame (3) arranged with regard to a longitudinal direction (X) of the straddled vehicle (1), a transverse direction (Y) of the straddled vehicle (1) and an up-down direction (Z) of the straddled vehicle (1);
a power unit (11) configured to swing with respect to the vehicle body frame (3);
a rear arm (53) configured to swing with respect to the vehicle body frame (3); and
a rear wheel (55) supported by the power unit (11) and the rear arm (53), wherein the power unit (11) includes:
an engine (12) configured to generate power;
a continuously variable transmission (21) configured to transmit power of the engine (12) to the rear wheels (55);
an electric motor (31) configured to change a gear ratio of the continuously variable transmission (21); and
a first support (41) that supports the rear arm (53), **characterised in that**
at least a part of the electric motor (31) overlaps the first support (41) in a side view of the straddled vehicle (1).

2. The straddled vehicle (1) according to claim 1, wherein the engine (12) includes
a crankcase (13) that is disposed in front of the rear wheel (55) with regard to the longitudinal direction (X) of the straddled vehicle (1),
the electric motor (31) is disposed outside the crankcase (13), and
the first support (41) is disposed outside the crankcase (13).

3. The straddled vehicle (1) according to claim 2, wherein the electric motor (31) is disposed above the crankcase (13) with regard to the up-down direction (Z) of the straddled vehicle (1), and preferably the electric motor (31) overlaps with the crankcase (13) in top view of the vehicle (1).

4. The straddled vehicle (1) according to claim 2 or 3, wherein the first support (41) includes:
a cylindrical portion (42) that has a cylindrical shape, the cylindrical portion (42) being connected to the rear arm (53); and
a plate portion (43) that extends from the crankcase (13) to the cylindrical portion (42), and
at least a part of the electric motor (31) overlaps the plate portion (43) in a side view of the straddled vehicle (1).

5. The straddled vehicle (1) according to any one of claims 2 to 4, wherein the electric motor (31) is attached to the crankcase (13).

6. The straddled vehicle (1) according to any one of claims 2 to 5, wherein the crankcase (13) includes:
a first case (14); and
a second case (15) that is coupled to the first case (14), and
the electric motor (31) is fixed to the first case (14), and
the first support (41) is fixed to the second case (15).

7. The straddled vehicle (1) according to claim 6, wherein the electric motor (31) is configured to be detachable from the first case (14) in a state where the second case (15) is coupled to the first case (14).

8. The straddled vehicle (1) according to any one of claims 2 to 7, wherein the straddled vehicle (1) includes a first bolt (33), and
when the first bolt (33) is at a first fastening position, the first bolt (33) fastens the electric motor (31) to the crankcase (13), and
the first support (41) has a through hole (44) for inserting a tool for fastening the first bolt (33) and loosening the first bolt (33).

9. The straddled vehicle (1) according to claim 8, wherein when the first bolt (33) is at the first fastening position, the first bolt (33) is visually recognizable through the through hole (44) in a side view of the straddled vehicle (1).

10. The straddled vehicle (1) according to claim 8 or 9, wherein the through hole (44) extends in the transverse direction (Y) of the straddled vehicle (1).

11. The straddled vehicle (1) according to any one of claims 8 to 10, wherein when the first bolt (33) is at the first fastening position, the first bolt (33) extends in the transverse direction (Y) of the straddled vehicle (1).

12. The straddled vehicle (1) according to any one of claims 1 to 11, wherein a separation distance (D) between the electric motor (31) and the first support (41) in the transverse direction (Y) of the straddled vehicle (1) is smaller than a length (L) of the electric motor (31) in the transverse direction (Y) of the straddled vehicle (1).

13. The straddled vehicle (1) according to any one of claims 1 to 12, wherein the power unit (11) includes a transmission case (20) that houses the continuously variable transmission (21), and
the electric motor (31) is disposed between the transmission case (20) and the first support (41) in the transverse direction (Y) of the straddled vehicle (1).

14. The straddled vehicle (1) according to claim 13, wherein at least a part of the electric motor (31) overlaps the transmission case (20) in a side view of the straddled vehicle (1).

15. The straddled vehicle (1) according to any one of claims 1 to 14, wherein the straddled vehicle (1) includes a seat (61) that is disposed above the power unit (11) with regard to the up-down direction (Z) of the straddled vehicle (1), and preferably the seat (61) overlaps with the power unit (11) in top view of the vehicle (1).

## Patentansprüche

1. Ein Spreizsitzfahrzeug (1), das umfasst:
einen Fahrzeugkörperrahmen (3), der in Bezug auf eine Längsrichtung (X) des Spreizsitzfahrzeugs (1), eine Querrichtung (Y) des Spreizsitzfahrzeugs (1) und eine Fahrzeug-Auf-Ab-Richtung (Z) des Spreizsitzfahrzeugs (1) angeordnet ist;
eine Leistungseinheit (11), die so ausgebildet ist, dass sie relativ zum Fahrzeugkörperrahmen (3) schwenkbar ist;
einen hinteren Arm (53), der so ausgebildet ist, dass er relativ zum Fahrzeugkörperrahmen (3) schwenkbar ist; und
ein Hinterrad (55), das von der Leistungseinheit (11) und dem hinteren Arm (53) gelagert wird, wobei die Leistungseinheit (11) enthält:
einen Motor (12), der konfiguriert ist, um Leistung zu erzeugen;
ein kontinuierlich variables Getriebe (21), das konfiguriert ist, um die Leistung des Motors (12) auf die Hinterräder (55) zu übertragen;
einen Elektromotor (31), der konfiguriert ist, um ein Übersetzungsverhältnis des kontinuierlich variablen Getriebes (21) zu verändern; und
eine erste Halterung (41), die den hinteren Arm (53) lagert, **dadurch gekennzeichnet, dass**
in einer Seitenansicht des Spreizsitzfahrzeugs (1) zumindest ein Teil des Elektromotors (31) die erste Halterung (41) überlappt.

2. Das Spreizsitzfahrzeug (1) gemäß Anspruch 1, wobei der Motor (12) enthält
ein Kurbelgehäuse (13) , das in Bezug auf die Längsrichtung (X) des Spreizsitzfahrzeugs (1) vor dem Hinterrad (55) angeordnet ist,
der Elektromotor (31) außerhalb des Kurbelgehäuses (13) angeordnet ist und
die erste Halterung (41) außerhalb des Kurbelgehäuses (13) angeordnet ist.

3. Das Spreizsitzfahrzeug (1) gemäß Anspruch 2, wobei der Elektromotor (31) in Bezug auf die Fahrzeug-Auf-Ab-Richtung (Z) oberhalb des Kurbelgehäuses (13) angeordnet ist und vorzugsweise der Elektromotor (31) in der Draufsicht auf das Fahrzeug (1) mit dem Kurbelgehäuse (13) überlappt.

4. Das Spreizsitzfahrzeug (1) gemäß Anspruch 2 oder 3, wobei die erste Halterung (41) enthält:
einen zylindrischen Abschnitt (42), der eine zylindrische Form hat, wobei der zylindrische Abschnitt (42) mit dem hinteren Arm (53) verbunden ist; und
einen Plattenabschnitt (43), der sich vom Kurbelgehäuse (13) zum zylindrischen Abschnitt (42) erstreckt, und
zumindest ein Teil des Elektromotors (31) in einer Seitenansicht des Spreizsitzfahrzeugs (1) den Plattenabschnitt (43) überlappt.

5. Das Spreizsitzfahrzeug (1) gemäß irgendeinem der Ansprüche 1 bis 4, wobei der Elektromotor (31) am Kurbelgehäuse (13) angebracht ist.

6. Das Spreizsitzfahrzeug (1) gemäß irgendeinem der Ansprüche 2 bis 5, wobei das Kurbelgehäuse (13) enthält:
ein erstes Gehäuse (14); und
ein zweites Gehäuse (15), das mit dem ersten Gehäuse (14) gekoppelt ist, und
der Elektromotor (31) ist am ersten Gehäuse (14) befestigt, und
die erste Halterung (41) ist am zweiten Gehäuse (15) befestigt.

7. Das Spreizsitzfahrzeug (1) gemäß Anspruch 6, wobei der Elektromotor (31) so konfiguriert ist, um in einem Zustand, in dem das zweite Gehäuse (15) mit dem ersten Gehäuse (14) verbunden ist, vom ersten Gehäuse (14) abnehmbar zu sein.

8. Das Spreizsitzfahrzeug (1) gemäß irgendeinem der Ansprüche 2 bis 7, wobei das Spreizsitzfahrzeug (1) einen ersten Bolzen (33) enthält, und
wenn sich der erste Bolzen (33) in einer ersten Befestigungsposition befindet, der erste Bolzen (33) den Elektromotor (31) am Kurbelgehäuse (13) befestigt, und
die erste Halterung (41) ein Durchgangsloch (44) hat, um ein Werkzeug zum Befestigen und Lösen des ersten Bolzens (33) einzuführen.

9. Das Spreizsitzfahrzeug (1) gemäß Anspruch 8, wobei, wenn sich der erste Bolzen (33) in der ersten Befestigungsposition befindet, der erste Bolzen (33) in einer Seitenansicht des Spreizsitzfahrzeugs (1) durch das Durchgangsloch (44) visuell erkennbar ist.

10. Das Spreizsitzfahrzeug (1) gemäß Anspruch 8 oder 9, wobei sich das Durchgangsloch (44) in Querrichtung (Y) des Spreizsitzfahrzeugs (1) erstreckt.

11. Das Spreizsitzfahrzeug (1) gemäß irgendeinem der Ansprüche 8 bis 10, wobei sich der erste Bolzen (33), wenn er sich in der ersten Befestigungsposition befindet, in der Querrichtung (Y) des Spreizsitzfahrzeugs (1) erstreckt.

12. Das Spreizsitzfahrzeug (1) gemäß irgendeinem der Ansprüche 1 bis 11, wobei ein Abstand (D) zwischen dem Elektromotor (31) und der ersten Halterung (41) in der Querrichtung (Y) des Spreizsitzfahrzeugs (1) kleiner ist als eine Länge (L) des Elektromotors (31) in Querrichtung (Y) des Spreizsitzfahrzeugs (1) ist.

13. Das Spreizsitzfahrzeug (1) gemäß irgendeinem der Ansprüche 1 bis 12, wobei die Leistungseinheit (11) ein Getriebegehäuse (20) enthält, das das kontinuierlich variable Getriebe (21) aufnimmt, und
der Elektromotor (31) in Querrichtung (Y) des Spreizsitzfahrzeugs (1) zwischen dem Getriebegehäuse (20) und der ersten Halterung (41) gelagert ist.

14. Das Spreizsitzfahrzeug (1) gemäß Anspruch 13, wobei zumindest ein Teil des Elektromotors (31) in einer Seitenansicht des Spreizsitzfahrzeugs (1) das Getriebegehäuse (20) überlappt.

15. Das Spreizsitzfahrzeug (1) gemäß irgendeinem der Ansprüche 1 bis 14, wobei das Spreizsitzfahrzeug (1) einen Sitz (61) enthält, der in Bezug auf die Fahrzeug-Auf-AbRichtung (Z) oberhalb der Leistungseinheit (11) angeordnet ist, und vorzugsweise der Sitz (61) in der Draufsicht auf das Fahrzeug (1) die Leistungseinheit (11) überlappt.

## Revendications

1. Véhicule à enfourcher (1) comprenant :
un cadre de véhicule (3) agencé par rapport à la direction longitudinale (X) du véhicule à enfourcher (1), la direction transversale (Y) du véhicule à enfourcher (1) et la direction haut-bas (Z) du véhicule à enfourcher (1) ;
un groupe moteur (11) configuré pour basculer par rapport au cadre de véhicule (3) ;
un bras arrière (53) configuré pour basculer par rapport au cadre de véhicule (3) ; et
une roue arrière (55) supportée par le groupe moteur (11) et le bras arrière (53),
dans lequel le groupe moteur (11) inclut :
un moteur (12) configuré pour générer de la puissance ;
une transmission variable en continu (21) configurée pour transmettre la puissance du moteur (12) aux roues arrière (55) ;
un moteur électrique (31) configuré pour changer le rapport de démultiplication de la transmission variable en continu (21) ; et
un premier support (41) qui supporte le bras arrière (53),
**caractérisé en ce qu'**au moins une partie du moteur électrique (31) recouvre le premier support (41) en vue latérale du véhicule à enfourcher (1).

2. Véhicule à enfourcher (1) selon la revendication 1, dans lequel
le moteur (12) inclut un carter (13) qui est disposé en avant de la roue arrière (55) par rapport à la direction longitudinale (X) du véhicule à enfourcher (1),
le moteur électrique (31) est disposé à l'extérieur du carter (13), et
le premier support (41) est disposé à l'extérieur du carter (13).

3. Véhicule à enfourcher (1) selon la revendication 2, dans lequel le moteur électrique (31) est disposé au-dessus du carter (13) par rapport à la direction haut-bas (Z) du véhicule à enfourcher (1), et de préférence le moteur électrique (31) recouvre le carter (13) en vue de dessus du véhicule (1).

4. Véhicule à enfourcher (1) selon la revendication 2 ou 3, dans lequel
le premier support (41) inclut :
une portion cylindrique (42) de forme cylindrique, la portion cylindrique (42) étant connectée au bras arrière (53) ; et
une portion de plaque (43) qui s'étend depuis le carter (13) jusqu'à la portion cylindrique (42), et
au moins une partie du moteur électrique (31) recouvre la portion de plaque (43) en vue latérale du véhicule à enfourcher (1).

5. Véhicule à enfourcher (1) selon l'une quelconque des revendications 2 à 4, dans lequel le moteur électrique (31) est attaché au carter (13).

6. Véhicule à enfourcher (1) selon l'une quelconque des revendications 2 à 5, dans lequel
le carter (13) inclut :
un premier boîtier (14) ; et
un deuxième boîtier (15) qui est couplé au premier boîtier (14), et
le moteur électrique (31) est fixé au premier boîtier (14), et
le premier support (41) est fixé au deuxième boîtier (15).

7. Véhicule à enfourcher (1) selon la revendication 6, dans lequel le moteur électrique (31) est configuré pour être détachable du premier boîtier (14) dans un état où le deuxième boîtier (15) est couplé au premier boîtier (14).

8. Véhicule à enfourcher (1) selon l'une quelconque des revendications 2 à 7, dans lequel
le véhicule à enfourcher (1) inclut un premier boulon (33), et
quand le premier boulon (33) est dans une première position de fixation, le premier boulon (33) fixe le moteur électrique (31) au carter (13), et
le premier support (41) comporte un trou traversant (44) destiné à insérer un outil pour fixer le premier boulon (33) et desserrer le premier boulon (33).

9. Véhicule à enfourcher (1) selon la revendication 8, dans lequel, quand le premier boulon (33) est dans la première position de fixation, le premier boulon (33) est visuellement reconnaissable à travers le trou traversant (44) en vue latérale du véhicule à enfourcher (1).

10. Véhicule à enfourcher (1) selon la revendication 8 ou 9, dans lequel le trou traversant (44) s'étend dans la direction transversale (Y) du véhicule à enfourcher (1).

11. Véhicule à enfourcher (1) selon l'une quelconque des revendications 8 à 10, dans lequel, quand le premier boulon (33) est dans la première position de fixation, le premier boulon (83) s'étend dans la direction transversale (Y) du véhicule à enfourcher (1).

12. Véhicule à enfourcher (1) selon l'une quelconque des revendications 1 à 11, dans lequel la distance de séparation (D) entre le moteur électrique (31) et le premier support (41) dans la direction transversale (Y) du véhicule à enfourcher (1) est inférieure à la longueur (L) du moteur électrique (31) dans la direction transversale (Y) du véhicule à enfourcher (1).

13. Véhicule à enfourcher (1) selon l'une quelconque des revendications 1 à 12, dans lequel
le groupe moteur (11) inclut un boîtier de transmission (20) qui abrite la transmission variable en continu (21), et
le moteur électrique (31) est disposé entre le boîtier de transmission (20) et le premier support (41) dans la direction transversale (Y) du véhicule à enfourcher (1).

14. Véhicule à enfourcher (1) selon la revendication 13, dans lequel au moins une partie du moteur électrique (31) recouvre le boîtier de transmission (20) en vue latérale du véhicule à enfourcher (1).

15. Véhicule à enfourcher (1) selon l'une quelconque des revendications 1 à 14, dans lequel le véhicule à enfourcher (1) inclut un siège (61) qui est disposé au-dessus du groupe moteur (11) par rapport à la direction haut-bas (Z) du véhicule à enfourcher (1), et de préférence le siège (61) recouvre le groupe moteur (11) en vue de dessus du véhicule (1).
